# EUROPEAN PATENT APPLICATION

(11) **EP 4 661 451 A1**
(43) Date of publication of application: **10.12.2025**
(21) Application number: 24872765.3
(22) Date of filing: 03.09.2024
(51) Int. Cl.: H04W 8/00, H04W 4/80, H04W 76/14, H04W 84/12, H04L 67/51, H04L 67/104, H04W 40/32, H04W 84/18

(54) **ELECTRONIC DEVICE FOR SEARCHING FOR EXTERNAL ELECTRONIC DEVICE WHICH SUPPORTS NAN COMMUNICATION AND EXTERNAL ELECTRONIC DEVICE WHICH SUPPORTS P2P COMMUNICATION, AND OPERATION METHOD OF ELECTRONIC DEVICE**

(30) Priority: 27.09.2023 KR 20230130387; 31.10.2023 KR 20230147838
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR); LEE, Soonho, Suwon-si, Gyeonggi-do 16677 (KR); JANG, Wonjun, Suwon-si, Gyeonggi-do 16677 (KR)
(74) Representative: Gulde & Partner
(86) International application number: PCT/KR2024/013267
(87) International publication number: WO 2025/071057

(57) **Abstract**

In an electronic device and an operation method of the electronic device, according to an embodiment, the electronic device may comprise a communication circuit for supporting neighbor awareness network (NAN) communication and P2P communication different from the NAN communication. The electronic device may comprise a processor. The electronic device may comprise a memory. The memory may store instructions that, when executed by the processor, cause the electronic device to discover a first external electronic device which supports NAN communication and/or a second external electronic device which supports P2P communication, through at least one social channel used to perform searching through the P2P communication, on the basis of schedule information for discovering the first external electronic device and the second external electronic device through at least one channel comprising the at least one social channel. The memory may store instructions to discover, on the basis of the schedule information, the first external electronic device and/or the second external electronic device through a social channel used to perform the NAN communication among the at least one social channel.

## Description

### [Technical Field]

The disclosure relates to an electronic device and a method for operating the electronic device and, more particularly, to an electronic device configured to discover an external electronic device configured to support NAN communication and an external electronic device configured to support P2P communication.

### [Background Art]

As various electronic devices have become widespread, the speed of wireless communication that may be used by various electronic devices has been increased.

A technology for supporting data transmission/reception in a peer-to-peer (P2P) type is defined in IEEE 802.11 WLAN standards. The technology referred to as Wi-Fi P2P may support electronic devices so as to transmit and/or receive data without going through an AP.

At least one electronic device may be connected to each other through the Wi-Fi P2P technology, and multiple electronic devices may transmit and/or receive data by using one electronic device as a medium. The electronic device used as a medium is defined as a group owner (GO), and the other electronic devices may be defined as group clients (GCs).

In addition, various types of proximity services that use low-power discovery technology have been developed recently. For example, a proximity service (or proximity communication service) has been developed such that electronic devices adjacent to each other can exchange data quickly through a proximity network. Proximity services may include a low-power proximity service that uses Bluetooth low energy (BLE) beacons, or a low-power proximity service based on a low-power short-range communication technology (for example, neighbor awareness networking (NAN) or Wi-Fi aware) (hereinafter, referred to as "NAN") based on a wireless local area network (WLAN).

According to an embodiment, a NAN-based low-power proximity service (hereinafter, referred to as a "proximity service") refers a service for configuring and using a proximity network which is dynamically changed by movements of electronic devices, and a set of electronic devices constituting a proximity network may be referred to as a cluster. In the case of a proximity service, a signal (for example, a beacon) for a discovery and a service discovery frame (SDF) (hereinafter, referred to as "SDF") may be transmitted/received within a time duration (or communication duration) in which electronic devices included in a cluster are synchronized with each other. For example, at least one electronic device in a cluster may transmit a signal for indicating the existence of the cluster, and new electronic devices supposed to participate in the cluster may receive the signal.

Respective electronic devices in the cluster may differently configure the active duration in which signals can be transmitted/received differently from each other, in order to reduce current consumption (or power consumption). In connection with NAN communication, the active duration in which signals can be transmitted/received may be referred to as a discovery window (DW). In addition, electronic devices included in the cluster may maintain a low-power state (for example, a sleep state) in durations other than the discovery window, thereby reducing current consumption.

### [Disclosure of Invention]

### [Technical Problem]

An electronic device may support both NAN communication and P2P communication. The electronic device may discover a counterpart electronic device (for example, an external electronic device configured to support NAN communication or an external electronic device configured to support P2P communication) with which various pieces of data can be exchanged. However, the electronic device may have difficulty in identifying the short-range wireless communication (for example, NAN communication or P2P) supported by the counterpart electronic device.

Therefore, the electronic device may discover external electronic devices by using all types of short-range wireless communication that can be supported by the electronic device. The electronic device may successively perform an operation of discovering an external electronic device configured to support NAN communication through the NAN communication and an operation of discovering an external electronic device configured to support P2P communication through the P2P communication. In case that an increased time is necessary to perform both the operation of discovering an external electronic device configured to support NAN communication through the NAN communication and the operation of discovering an external electronic device configured to support P2P communication through the P2P communication, the time (or latency) necessary to exchange various pieces of data may increase. The quality of services related to exchange of various pieces of data may be degraded by the increased time (or latency) necessary to exchange various pieces of data.

The technical problems to be solved by the disclosure are not limited to the above-mentioned technical problems, and other technical problems not mentioned herein will be clearly understood from the following descriptions by those skilled in the art to which the disclosure pertains.

### [Solution to Problem]

An electronic device according to an embodiment may include a communication circuit configured to support neighbor awareness network (NAN) communication and P2P communication different from the NAN communication. The electronic device may include a processor. The electronic device may include a memory. The memory may store instructions which, when executed by the processor, cause the electronic device to, based on schedule information for discovering a first external electronic device configured to support the NAN communication and a second external electronic device configured to support the P2P communication through at least one channel including at least one social channel used to perform a discovery through the P2P communication, discover the first external electronic device and/or the second external electronic device through the at least one social channel. The memory may store instructions which cause the electronic device to, based on the schedule information, discover the first external electronic device and/or the second external electronic device through a social channel used to perform the NAN communication among the at least one social channel.

A method for operating an electronic device according to an embodiment may include an operation of, based on schedule information for discovering a first external electronic device configured to support NAN communication and a second external electronic device configured to support P2P communication through at least one channel including at least one social channel used to perform a discovery through the P2P communication, discovering the first external electronic device and/or the second external electronic device through the at least one social channel. The method for operating an electronic device may include an operation of, based on the schedule information, discovering the first external electronic device and/or the second external electronic device through a social channel used to perform the NAN communication among the at least one social channel.

### [Advantageous Effects of Invention]

An electronic device and a method for operating the electronic device according to an embodiment may, based on schedule information for discovering a first external electronic device configured to support NAN communication and a second external electronic device configured to support P2P communication through at least one social channel used to perform a discovery through the P2P communication, discover the first external electronic device and/or the second external electronic device through the at least one social channel. Therefore, the electronic device may simultaneously perform an operation of discovering an external electronic device configured to support NAN communication and an operation of discovering an external electronic device configured to support P2P communication, thereby reducing the time necessary to discover external electronic devices configured to support NAN communication and P2P communication.

Advantageous effects obtainable in the disclosure are not limited to the above-mentioned advantageous effects, and other advantageous effects not mentioned herein will be clearly understood from the following descriptions by those skilled in the art to which the disclosure pertains.

### [Brief Description of Drawings]

FIG. 1 is a block diagram of an electronic device according to an embodiment.
FIG. 2 is a diagram illustrating a neighbor awareness network (NAN) cluster according to an embodiment.
FIG. 3 is a diagram illustrating a signal transmission protocol of an electronic device included in a NAN cluster according to an embodiment.
FIG. 4 is a diagram illustrating an example of data transmission/reception in a NAN cluster according to an embodiment.
FIG. 5 is a diagram illustrating an example in which an electronic device according to an embodiment discovers a first external electronic device configured to support NAN communication and/or a second external electronic device configured to support P2P communication.
FIG. 6 is a block diagram of an electronic device according to an embodiment.
FIG. 7 is a diagram illustrating schedule information used by an electronic device according to an embodiment to discover a first external electronic device and/or a second external electronic device through at least one social channel used to perform a discovery through P2P communication.
FIG. 8 is a diagram illustrating an example in which an electronic device according to an embodiment discovers a first external electronic device and/or a second external electronic device through at least one social channel used to perform a discovery through P2P communication.
FIG. 9 is a diagram illustrating an example of changing schedule information in case that a first external electronic device is discovered while an electronic device according to an embodiment discovers a first external electronic device and/or a second external electronic device through at least one social channel used to perform a discovery through P2P communication.
FIG. 10A, FIG.10B, FIG. 10C, FIG. 10D, and FIG. 10E are diagrams illustrating schedule information according to which an electronic device according to an embodiment awaits a discovery through at least one social channel used to perform a discovery through P2P communication.
FIG. 11 is an operation flowchart illustrating a method for operating an electronic device according to an embodiment.

### [Mode for the Invention]

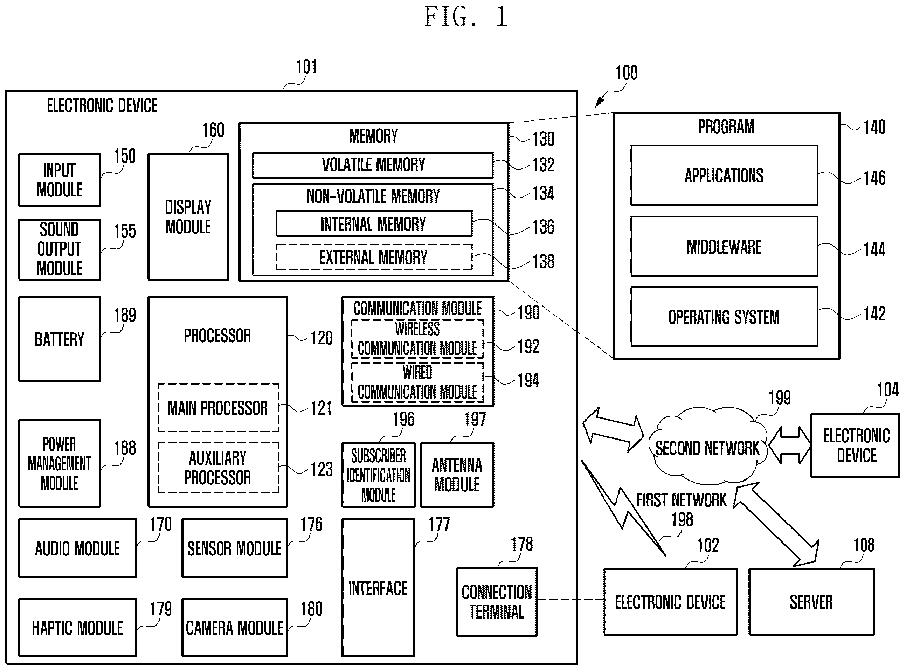

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

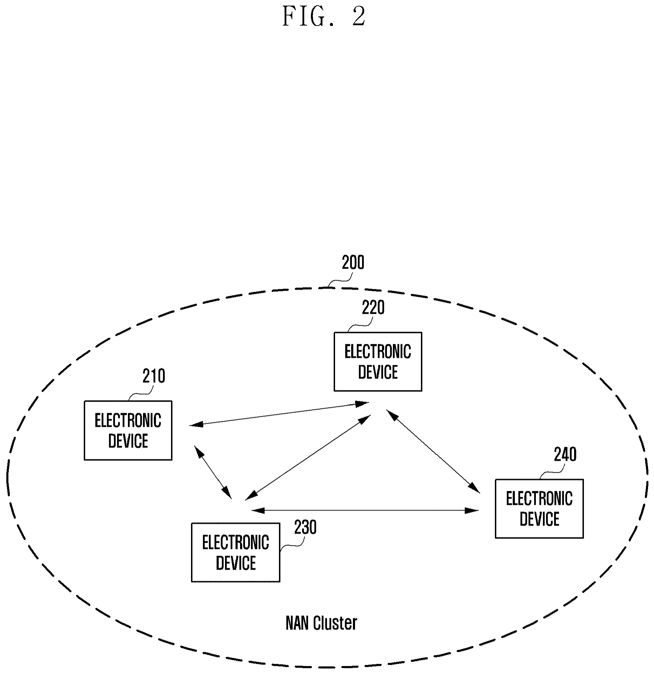

FIG. 2 is a diagram illustrating a neighbor awareness network (NAN) cluster according to various embodiments of the disclosure.

For example, FIG. 2 may show a configuration example of a neighbor awareness networking (NAN) cluster 200 for a proximity network according to various embodiments. In the following description, the cluster 200 may refer to a set of electronic devices 210, 220, 230, and 240, in which a proximity network is configured so that the respective electronic devices (or NAN devices) 210, 220, 230, and 240 (e.g., the electronic device 101 of FIG. 1) transmit and receive data to each other. For example, cluster 200 may be referred to as a NAN cluster according to NAN specifications (or standards).

Referring to FIG. 2, the cluster 200 may include multiple electronic devices 210, 220, 230, and 240. The electronic devices 210, 220, 230, and 240 included in the cluster 200 may transmit or receive a beacon (or discovery beacon) and/or a service discovery frame (SDF) (hereinafter, "SDF") within a synchronized time duration (or communication duration) (e.g., discovery (or search) window (discovery window (DW)).

In the electronic devices 210, 220, 230, and 240 in the cluster 200, time clocks may be synchronized with each other. For example, the electronic devices 210, 220, 230, and 240 may be synchronized with a time clock of one electronic device (e.g., the electronic device 210), and may exchange beacons and SDFs with each other in the same discovery window.

According to an embodiment, an electronic device supporting a NAN-based low-power short-range communication technology may broadcast a discovery signal (e.g., beacon) for discovering a different electronic device in each preconfigured first cycle (e.g., about 100 msec), and may perform scanning in each preconfigured second cycle (e.g., about 10 msec) so as to receive a discovery signal broadcast from another electronic device.

The electronic device 210, 220, 230, or 240 may detect at least one other electronic device located around the electronic device, based on the received discovery signal via scanning, and may perform NAN cluster synchronization with the detected at least one other electronic device. The NAN cluster synchronization may include receiving time clock information of the electronic device representing the NAN cluster so that the electronic devices included in the NAN cluster transmit and/or receive data via the same channel and/or during the same time period.

For example, as illustrated in FIG. 2, each of the multiple electronic devices 210, 220, 230, and 240 may transmit a beacon and receive beacons from other electronic devices 210, 220, 230, and 240 so that one cluster 200 operating according to a synchronized time clock may be formed, and the electronic devices 210, 220, 230, and 240 in the cluster 200 may perform NAN cluster synchronization.

The NAN cluster synchronization may be performed based on a channel and time of an electronic device having a highest master preference in the cluster 200. For example, the electronic devices 210, 220, 230, and 240 formed via discovery in the cluster 200 may exchange signals relating to master preference information indicating a preference for operating as an anchor master, and may determine an electronic device, which has a highest master preference, as an anchor master (or master device) via the exchanged signals.

The anchor master may refer to an electronic device which is a reference for time and channel synchronization of the electronic devices 210, 220, 230, and 240 in the cluster 200. The anchor master may be changed according to the master preference of the electronic device. Each of the time and channel synchronized electronic devices 210, 220, 230, and 240 may transmit a beacon and an SDF and receive beacons and SDFs from other electronic devices in the cluster 200 within a discovery window (or discovery interval) repeated according to a preconfigured cycle. According to an embodiment, beacons may be periodically transmitted or received in each discovery window in order to continuously maintain time and channel synchronization of the electronic devices 210, 220, 230, and 240 in the cluster 200. The SDFs may be transmitted or received in the discovery window as needed to provide a service with the discovered electronic devices 210, 220, 230, and 240. According to an embodiment, the electronic device operating as the anchor master from among the time and channel synchronized electronic devices 210, 220, 230, and 240 may transmit a beacon in an interval between the discovery windows to detect a new electronic device.

Each of the electronic devices 210, 220, 230, and 240 in the cluster 200 may reduce current consumption by operating in an active state only during the discovery window and operating in a low-power state (e.g., a sleep state) during the remaining intervals outside the discovery window.

For example, the discovery window is a duration (e.g., milliseconds) in which the electronic device is in the active state (or wake state) and is consuming a large amount of current, whereas in intervals outside the discovery window, the electronic device is in a sleep state in which low-power discovery may be possible.

The electronic devices 210, 220, 230, and 240 in the cluster 200 may be concurrently activated at a start time (e.g., DW start) of the synchronized discovery window, and may be concurrently switched to the sleep state at an end time (e.g., DW end) of the discovery window.

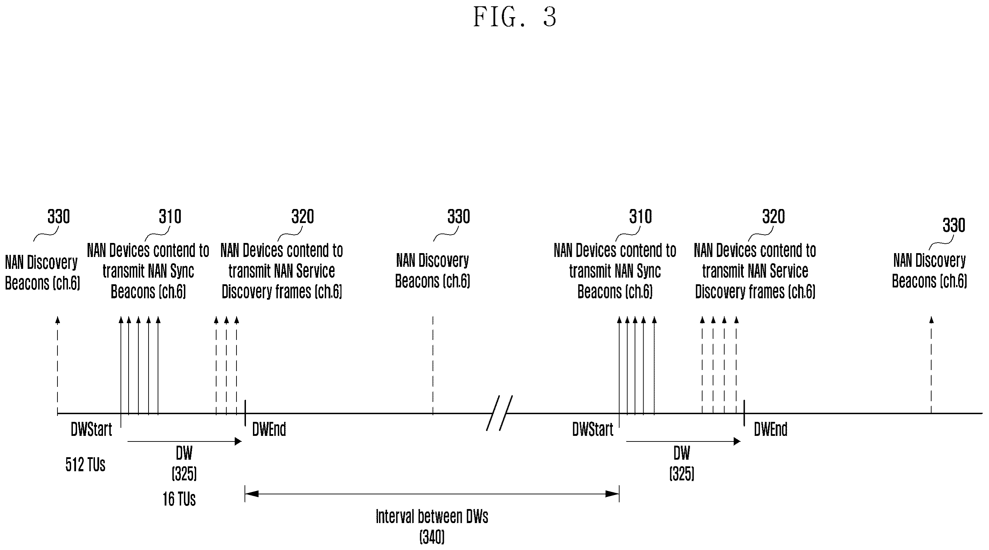

The electronic devices 210, 220, 230, and 240 included in the cluster 200 may perform discovery, synchronization, and data exchange using a protocol illustrated below in FIG. 3.

FIG. 3 is a diagram illustrating a protocol for transmission of a signal of an electronic device included in a NAN cluster according to various embodiments of the disclosure.

For example, FIG. 3 may illustrate an exemplary diagram for a discovery window according to various embodiments. FIG. 3 describes an example in which electronic devices included in one cluster transmit signals through a specific channel (e.g., channel 6 (ch6)), based on the NAN standards.

Referring to FIG. 3, the electronic devices included in one cluster may transmit synchronization beacons 310 and SDFs 320 in a synchronized discovery window (DW) 325. A discovery beacon 330 may be transmitted by at least one electronic device in an interval 340 (e.g., an interval between discovery windows) other than the discovery window 325. According to an embodiment, the electronic devices may transmit the synchronization beacon 310 and the SDF 320, based on contention. For example, the synchronization beacon 310 and the SDF 320 may be transmitted based on contention between respective electronic devices belonging to the cluster.

The discovery window 325 may be an interval in which, for data exchange between the respective electronic devices, the electronic devices are activated from a sleep state, which is a power saving mode, to a wake-up state. For example, the discovery window 325 may be divided into time units (TUs) of millisecond units. According to an embodiment, the discovery window 325 for transmission or reception of the synchronization beacon 310 and the SDF 320 may occupy 16 time units (16 TUs) and may have a cycle (or interval) repeated with 512 time units (512 TUs).

The discovery beacon 330 may indicate a signal transmitted to enable an electronic device, which has not joined the cluster, to discover the cluster. For example, the discovery beacon 330 is a signal for notification of the presence of the cluster, and electronic devices not participating in the cluster may perform a passive scan and receive the discovery beacon 330 so as to discover and join the cluster.

The discovery beacon 330 may include information necessary for synchronization with the cluster. For example, the discovery beacon 330 may include at least one of a frame control (FC) field indicating a signal function (e.g., beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information of the electronic device transmitting the discovery beacon 330.

The discovery beacon 330 may include at least one proximity network (or cluster)-related information element. In an embodiment, the proximity network-related information may be referred to as attribute information.

The synchronization beacon 310 may indicate a signal for maintaining synchronization between synchronized electronic devices in the cluster. The synchronization beacon 310 may be transmitted by a synchronization device among the electronic devices in the cluster. For example, the synchronization device may include an anchor master electronic device, a master electronic device (master device), or a non-master sync device defined in the NAN standards.

The synchronization beacon 310 may include information necessary for synchronization of the electronic devices within the cluster. For example, the synchronization beacon 310 may include at least one of an FC field indicating a signal function (e.g., beacon), a broadcast address, a MAC address of a transmission electronic device, a cluster identifier, a sequence control field, a time stamp for a beacon frame, a beacon interval indicating an interval between start points of the discovery window 325, or capability information for the transmission electronic device. According to an embodiment, the synchronization beacon 310 may include at least one proximity network (or cluster)-related information element. For example, the proximity network-related information may include contents for a service provided via the proximity network.

The SDF 320 may indicate a signal for data exchange via the proximity network. According to an embodiment, the SDF 320 may indicate a vendor-specific public action frame, and may include various fields. For example, the SDF 320 may include a category or action field, and may include at least one piece of proximity network-related information.

The synchronization beacon 310, the SDF 320, and the discovery beacon 330 may include proximity network-related information. In an embodiment, the proximity network-related information may include an identifier indicating an information type, an information length, and a body field that is corresponding information. According to an embodiment, the corresponding information may include at least one of master indication information, cluster information, service identifier list information, service descriptor information, connection capability information, wireless LAN infrastructure information, peer-to-peer (P2P) operation information, independent basic service set (IBSS) information, mesh information, additional proximity network service discovery information, further availability map information, country code information, ranging information, cluster discovery information, or vendor-specific information.

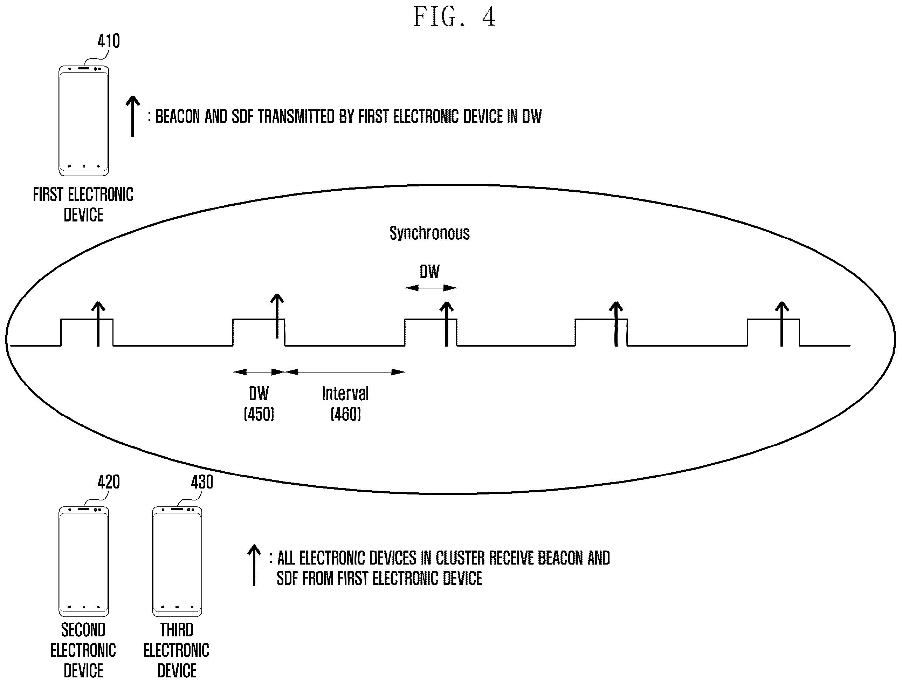

FIG. 4 is a diagram illustrating an example of data transmission or reception in a NAN cluster according to various embodiments of the disclosure.

For example, FIG. 4 describes an example in which a first electronic device 410, a second electronic device 420, and a third electronic device 430 form one cluster via a short-range wireless communication technology, and the respective electronic devices 410, 420, and 430 may transmit or receive beacons and/or SDFs between each other. According to an embodiment, FIG. 4 may provide an example in which the first electronic device 410 among the electronic devices 410, 420, and 430 constituting the cluster functions as a master electronic device.

Referring to FIG. 4, the first electronic device 410 may transmit a beacon and an SDF within a discovery window 450. The first electronic device 410 may broadcast a beacon and an SDF in the discovery window 450 that is repeated in each preconfigured interval (e.g., an interval 460).

The second electronic device 420 and the third electronic device 430 may receive the beacon and the SDF which are transmitted by the first electronic device 410. According to an embodiment, each of the second electronic device 420 and the third electronic device 430 may receive the beacon and the SDF broadcast from the first electronic device 410 in each discovery window 450.

The beacon transmitted within the discovery window 450 may include a synchronization beacon, and may include information for maintaining synchronization between the electronic devices 410, 420, and 430. For example, the second electronic device 420 and/or the third electronic device 430 may perform NAN cluster synchronization based on time clock information of the first electronic device 410 operating as the master, the time clock information being included in the beacon transmitted by the first electronic device 410. The second electronic device 420 and/or the third electronic device 430 may be synchronized so that the discovery window 450 may be activated at the same time.

In an interval (e.g., the interval 460) other than the discovery window 450, the electronic devices 410, 420, and 430 may maintain a sleep state to reduce current consumption. For example, the electronic devices 410, 420, and 430 may operate, based on the synchronized time clock, in a wake state only in the discovery window 450 interval so as to reduce current consumption.

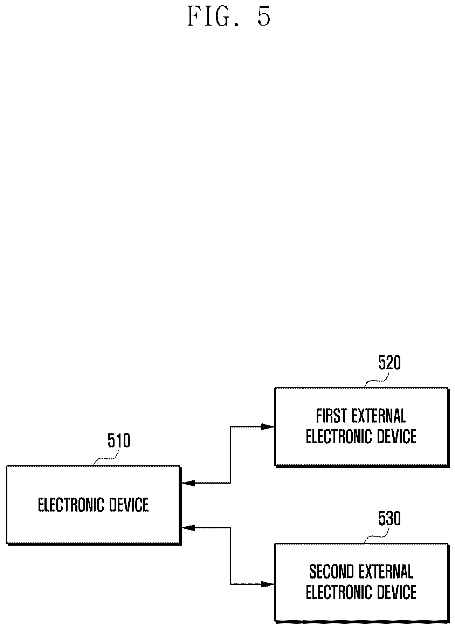

FIG. 5 is a diagram illustrating an example in which an electronic device according to an embodiment discovers a first external electronic device configured to support NAN communication and/or a second external electronic device configured to support P2P communication.

Referring to FIG. 5, the electronic device 510 (for example, the electronic device 101 in FIG. 1) may support neighbor awareness network (NAN) and/or peer-to-peer (P2P) communication. The P2P communication may refer to a type of communication in which electronic devices can perform device-to-device (D2D) communication without going through an access point (AP). According to an example, the P2P communication may include Wi-Fi direct.

The electronic device 510 may activate both NAN communication and/or P2P communication for various reasons. According to an example, the electronic device 510 may discover a counterpart electronic device with which various pieces of data may be exchanged (for example, a first external electronic device 520 configured to support NAN communication or a second external electronic device 530 configured to support P2P communication), as an electronic device with which the electronic device 510 wants to exchange various pieces of data (for example, content). However, the electronic device 510 may have difficulty in identifying the short-range wireless communication (for example, NAN communication or P2P) supported by the counterpart electronic device (for example, the first external electronic device 520 or the second external electronic device 530). Therefore, the electronic device 510 may discover external electronic devices by using all type of the short-range wireless communication which can be supported by the electronic device 510. According to an example, in case that the electronic device 510 supports NAN communication and/or P2P communication, the electronic device 510 may successively perform an operation of discovering an external electronic device configured to support NAN communication through the NAN communication, and an operation of discovering an external electronic device configured to support P2P communication through the P2P communication. In case that an increased time is necessary to perform both the operation of discovering a first external electronic device 520 configured to support NAN communication through the NAN communication and the operation of discovering a second external electronic device 530 configured to support P2P communication through the P2P communication, the time (or latency) necessary to exchange various pieces of data may increase. The quality of services related to exchange of various pieces of data may be degraded by the increased time (or latency) necessary to exchange various pieces of data.

Hereinafter, an example in which the electronic device 510 simultaneously discovers a first external electronic device 520 configured to support NAN communication and discovers a second external electronic device 530 configured to support P2P communication, thereby reducing the time necessary to perform both the operation of discovering the first external electronic device 520 configured to support NAN communication through the NAN communication and the operation of discovering the second external electronic device 530 configured to support P2P communication through the P2P communication, will be described.

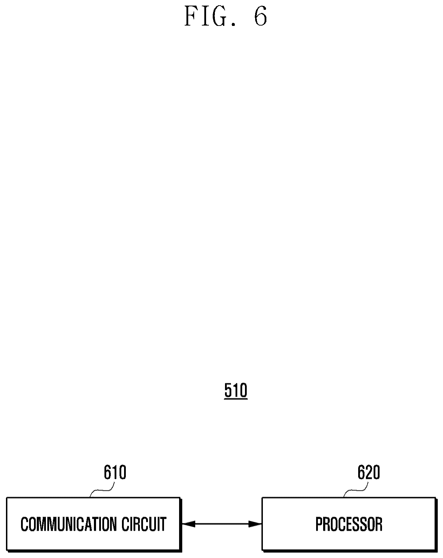

FIG. 6 is a block diagram of an electronic device according to an embodiment.

According to an embodiment, the electronic device (for example, the electronic device 510 in FIG. 5) may include a communication circuit 610 (for example, the wireless communication module 192 in FIG. 1) and/or a processor 620 (for example, the processor 120 in FIG. 1).

The communication circuit 610 may support neighbor awareness network (NAN) communication and peer-to-peer (P2P) communication which is different from the NAN communication. The P2P communication which is different from the NAN communication may refer to a type of communication in which electronic devices can perform device-to-device communication without going through an AP. According to an example, the P2P communication may include Wi-Fi direct.

The communication circuit 610 may include various circuit structures used to modulate and/or demodulate signals in the electronic device 510. For example, the communication circuit 610 may modulate baseband signals into radio frequency (RF) band signals so as to be to output through an antenna (not illustrated), or may demodulate RF band signals received through the antenna into baseband signals and may transmit the same to the processor 620.

The processor 620 may perform operations of receiving data transmitted by an application processor (for example, the processor 120 in FIG. 1) and generating packets for transmitting the received data. The processor 620 may be defined as a communication processor or an application processor included in a communication module (for example, the wireless communication module 192 in FIG. 1). The processor 620 may be electrically or operatively connected to the communication circuit 610 so as to control the communication circuit 610.

The processor 620 may activate NAN communication and/or P2P communication for various reasons. According to an example, the processor 620 may control the communication circuit 610 so as to activate NAN communication and/or P2P communication in response to activation of an application capable of performing a service that uses NAN communication and/or P2P communication, or in response to activation of a service that uses NAN communication and/or P2P communication.

The processor 620 may control the communication circuit 610 such that an operation of discovering a first external electronic device 520 configured to support NAN communication and/or an operation of discovering a second external electronic device 530 configured to support P2P communication can be performed simultaneously or substantially simultaneously. The processor 620 may control the communication circuitry 610 so as to activate both the NAN communication interface implemented by hardware and/or software components of the communication circuit 610 and the P2P communication interface implemented by hardware and/or software components of the communication circuit 610. The NAN communication interface and the P2P communication interface may be activated simultaneously or successively.

The processor 620 may control the communication circuitry 610 so as to activate the NAN communication interface and the P2P communication interface and to perform an operation of discovering a first external electronic device 520 configured to support NAN communication and a second external electronic device 530 configured to support P2P communication through at least one social channel (for example, channel no. 1, channel no. 6, and channel no. 11) used to perform a discovery through P2P communication and/or at least one channel used to perform transmission and/or reception of data.

The processor 620 may perform an operation of discovering a first external electronic device 520 configured to support NAN communication and a second external electronic device 530 configured to support P2P communication, according to schedule information (or based on schedule information) related to the operation of discovering a first external electronic device 520 configured to support NAN communication and a second external electronic device 530 configured to support P2P communication. The schedule information may include a schedule related to simultaneously discovering a first external electronic device 520 configured to support NAN communication and a second external electronic device 530 configured to support P2P communication, and the schedule related to simultaneously discovering a first external electronic device 520 configured to support NAN communication and a second external electronic device 530 configured to support P2P communication may be referred to as a common discovery search schedule (CDSS).

The schedule information may be configured (or set) to include a first period (or a multi-channel schedule period (MCSP)) during which a first external electronic device 520 configured to support NAN communication and a second external electronic device 530 configured to support P2P communication are discovered through multiple channels that can be supported by the electronic device 510 or the communication circuit 610 of the electronic device 510, and a second period (or a social-channel schedule period (SCSP)) during which a first external electronic device 520 configured to support NAN communication and a second external electronic device 530 configured to support P2P communication are discovered through at least one social channel used to perform a discovery through P2P communication. Channels corresponding to the first period may include a channel other than at least one social channel used to perform a discovery through P2P communication among multiple channels that can be supported by the electronic device 510 or the communication circuit 610 of the electronic device 510. The schedule information may cause the electronic device 510 to discover a first external electronic device 520 configured to support NAN communication and a second external electronic device 530 configured to support P2P communication through multiple channels that can be supported by the electronic device 510 or the communication circuit 610 of the electronic device 510 during the first period, and may cause the electronic device 520 to discover a first external electronic device 520 configured to support NAN communication and a second external electronic device 530 configured to support P2P communication through at least one social channel used to perform a discovery through P2P communication during the second period.

The processor 620 may repeatedly perform an operation of discovering a first external electronic device 520 configured to support NAN communication and a second external electronic device 530 configured to support P2P communication through multiple channels that can be supported by the electronic device 510 or the communication circuit 610 of the electronic device 510, and an operation of discovering a first external electronic device 520 configured to support NAN communication and a second external electronic device 530 configured to support P2P communication through at least one social channel used to perform a discovery through P2P communication.

The schedule information may be configured to include the order of discoveries through at least one social channel used to perform a discovery through P2P communication. The order of discoveries may include the order (or sequence) of channels used for the discoveries.

According to an example, in case that the at least one social channel used to perform a discovery through P2P communication includes a first channel (for example, channel no. 1), a second channel (for example, channel no. 6), and/or a third channel (for example, channel no. 11), the order of discoveries included in the schedule information may be configured such that a first external electronic device 520 configured to support NAN communication and a second external electronic device 530 configured to support P2P communication are discovered through the first channel, a first external electronic device 520 configured to support NAN communication and a second external electronic device 530 configured to support P2P communication are discovered through the second channel, and a first external electronic device 520 configured to support NAN communication and a second external electronic device 530 configured to support P2P communication are discovered through the third channel. The above-described order is only an example for descriptions, and may be configured in various manners.

The processor 620 may configure the order of discoveries included in the schedule information such that the number of discoveries through a social channel (for example, channel no. 2) used to perform NAN communication, among the at least one social channel used to perform a discovery through P2P communication, is larger than the number of discoveries through other social channels. The number of social channels used to perform NAN communication (for example, one channel (channel no. 6)) may be smaller than the number of social channels used for discoveries through P2P communication (for example, three channels (channel nos. 1, 6, and 11)), and the probability of successful discoveries may increase in proportion to the number of social channels. Therefore, the processor 620 may configure the number of discoveries through social channels used to perform NAN communication to be larger than the number of discoveries through other social channels, thereby increasing the probability of successfully discovering a first external electronic device 520 configured to support NAN communication.

According to an example, the processor 620 may configure the order of discoveries included in the schedule information such that a first external electronic device 520 configured to support NAN communication and a second external electronic device 530 configured to support P2P communication are discovered through the first channel, a first external electronic device 520 configured to support NAN communication and a second external electronic device 530 configured to support P2P communication are discovered through the second channel, a first external electronic device 520 configured to support NAN communication and a second external electronic device 530 configured to support P2P communication are discovered through the third channel, and a first external electronic device 520 configured to support NAN communication and a second external electronic device 530 configured to support P2P communication are discovered through the second channel.

The schedule information may be configured to include the discovery time (or duration) to perform a discovery through at least one social channel used to perform a discovery through P2P communication.

According to an example, in case that the at least one social channel used to perform a discovery through P2P communication includes a first channel (for example, channel no. 1), a second channel (for example, channel no. 6), and/or a third channel (for example, channel no. 11), the discovery time included in the schedule information may be configured to include a discovery time to discover a first external electronic device 520 configured to support NAN communication and a second external electronic device 530 configured to support P2P communication through the first channel, a discovery time to discover a first external electronic device 520 configured to support NAN communication and a second external electronic device 530 configured to support P2P communication through the second channel, and a discovery time to discover a first external electronic device 520 configured to support NAN communication and a second external electronic device 530 configured to support P2P communication through the third channel.

The processor 620 may configure the discovery time included in the schedule information such that the time of discovery through a social channel (for example, channel no. 2) used to perform NAN communication, among the at least one social channel used to perform a discovery through P2P communication, is longer than the time of discovery through other social channels. The number of social channels used to perform NAN communication (for example, one channel (channel no. 6)) may be smaller than the number of social channels used for discoveries through P2P communication (for example, three channels (channel nos. 1, 6, and 11)), and the probability of successful discoveries may increase in proportion to the number of social channels. Therefore, the processor 620 may configure the time of discovery through social channels used to perform NAN communication to be longer than the time of discovery through other social channels, thereby increasing the probability of successfully discovering a second external electronic device 530 configured to support NAN communication.

The processor 620 may configure the time of discovery through social channels used to perform NAN communication such that the duration of a discovery window (DW) of the NAN cluster to which the electronic device 510 belongs is included in the time of discovery through social channels used to perform NAN communication. Social channels used to perform NAN communication and social channels used for discoveries through P2P communication may have the same frequency band (for example, 2.4 GHz), and the communication circuit 610 may be unable to simultaneously performing operations of transmission and/or reception of data through social channels used to perform NAN communication and operations of transmission and/or reception of data through social channels used for discoveries through P2P communication. In this case, the communication circuit 610 may be unable to simultaneously performing operations of transmission and/or reception of data in the discovery window (DW) of the NAN cluster to which the electronic device 510 belongs, and operations of transmission and/or reception of data through social channels used for discoveries through P2P communication, and the electronic device 510 may have degraded quality of NAN communication during the period of discovery through P2P communication. Therefore, the processor 620 may configure the time of discovery through social channels used to perform NAN communication such that the duration of the discovery window (DW) of the NAN cluster to which the electronic device 510 belongs is included in the time of discovery through social channels used to perform NAN communication, thereby minimizing the influence of operations of discovering a first external electronic device 520 and/or a second external electronic device 530 on the NAN communication.

The processor 620 may discover a first external electronic device 520 and/or a second external electronic device 530 during a time other than the discovery window configured for the NAN cluster to which the electronic device 510 belongs, among the time of discovery through a social channel (for example, a second channel) used to perform NAN communication.

The schedule information may be generated (or configured) by the processor 620, and may be stored in a memory (for example, the memory 130 in FIG. 1) of the electronic device 510 or a memory in the communication circuit 610.

The processor 620 may discover a first external electronic device 520 and/or a second external electronic device 530 through at least one social channel, based on schedule information for discovering a first external electronic device 520 configured to support NAN communication and a second external electronic device 530 configured to support P2P communication through at least one social channel used to perform a discovery through P2P communication.

The operation of discovering a first external electronic device 520 and/or a second external electronic device 530 through at least one social channel may include an operation of transmitting (or broadcasting) a service discovery frame (SDF) (for example, publish) which is a message for discovering an electronic device (for example, a first external electronic device 520) configured to support NAN communication and/or an operation of transmitting (or broadcasting) a probe request message which is a message for discovering an electronic device (for example, a second external electronic device 530) configured to support P2P communication.

The SDF which is a message for discovering an electronic device configured to support NAN communication may refer to a subscribe SDF. The subscribe SDF may include information of an electronic device 510 related to NAN communication. According to an example, the information of an electronic device 510 related to NAN communication may include at least one from among the name of a service activated in the electronic device 510, identification information of the service, the name of the electronic device 510, identification information of the electronic device 510, and an information element (IE) related to NAN communication. The information element related to NAN communication may include a master indication attribute which is a parameter used to determine whether the electronic device 510 is to operate as the master of the NAN cluster or not, and/or characteristics of the NAN cluster to which the electronic device 510 belongs.

Upon receiving the subscribe SDF, the first external electronic device 520 may transmit a publish SDF to the electronic device 510 as a message in response to the subscribe SDF.

The publish SDF may include information of a first external electronic device 520 related to NAN communication. According to an example, the information of a first external electronic device 520 related to NAN communication may include at least one from among the name of a service activated in the first external electronic device 520, identification information of the service, the name of the first external electronic device 520, identification information of the first external electronic device 520, and an information element (IE) related to NAN communication. The information element related to NAN communication may include a master indication attribute which is a parameter used to determine whether the first external electronic device 512 is to operate as the master of the NAN cluster or not, and/or characteristics of the NAN cluster to which the first external electronic device 520 belongs.

The processor 620 may successfully discover an electronic device configured to support NAN communication in case of receiving the publish SDF from the first external electronic device 520.

The message for discovering an electronic device configured to support P2P communication may be implemented as a probe request message, and the probe request message may include information of an electronic device 510 related to P2P communication. According to an example, the information of an electronic device 510 related to P2P communication may include at least one from among the name of a service activated in the electronic device 510, identification information of the service, the name of the electronic device 510, identification information of the electronic device 510, and an information element (IE) related to P2P communication. The information element related to P2P communication may include a group owner (GO) intent used to determine whether the electronic device 510 is to operate as the owner of the P2P group or not and/or characteristics of the P2P group to which the electronic device 510 belongs.

Upon receiving the probe request message, the second external electronic device 530 may transmit a probe response message corresponding to the probe request message to the electronic device 510.

The probe response message may include information of a second external electronic device 530 related to P2P communication. According to an example, the information of a second external electronic device 530 related to P2P communication may include at least one from among the name of a service activated in the second external electronic device 530, identification information of the service, the name of the second external electronic device 530, identification information of the second external electronic device 530, and/or an information element (IE) related to P2P communication. The information element related to P2P communication may include a group owner (GO) intent used to determine whether the second external electronic device 530 is to operate as the owner of the P2P group or not and/or characteristics of the P2P group to which the second external electronic device 530 belongs.

The processor 620 may successfully discover an electronic device configured to support NAN communication in case of receiving the probe response message from the second external electronic device 530.

Although the probe request message and/or the probe response message have been described as examples of messages exchanged in the process of discovering a second external electronic device 530, the disclosure may not be limited thereto. According to an example, the processor 620 may transmit a service discovery frame (for example, a subscribe SDF) to discover a second external electronic device 530, and the second external electronic device 530 may transmit a service discovery frame (for example, a publish SDF) to the electronic device 510 as a response message.

The processor 620 may provide information of discovered electronic devices (for example, a first external electronic device 520 and a second external electronic device 530) to the user. According to an example, the processor 620 may display the information of discovered electronic devices on the display (for example, the display module 160 in FIG. 1) of the electronic device 510.

The processor 620 may control the communication circuit 610 so as to automatically connect to discovered electronic devices (for example, a first external electronic device 520 and a second external electronic device 530).

Alternatively, upon receiving a user input for selecting at least one external electronic device from discovered electronic devices (for example, a first external electronic device 520 and a second external electronic device 530), the processor 620 may control the communication circuit 610 so as to connect to the selected external electronic device.

The processor 620 may control the communication circuit 610 so as to connect to the first external electronic device 520 through NAN communication, based on information included in the publish SDF transmitted by the first external electronic device 520. The processor 620 may control the communication circuit 610 so as to connect to the second external electronic device 530 through P2P communication, based on information included in the probe response message transmitted by the second external electronic device 530.

The processor 620 may perform NAN cluster synchronization with the first external electronic device 520 in the process of connecting to the first external electronic device 520 through NAN communication.

The NAN cluster synchronization may include an operation of receiving time clock information of the electronic device which represents the NAN (or the master device of the NAN cluster) such that electronic devices included in the NAN cluster 200 transmit and/or receive data in the same channel and/or during the same time. For example, the processor 620 may receive a beacon broadcast by the first external electronic device 520 and may perform NAN cluster synchronization, based on the time clock information of the first external electronic device 520 included in the beacon. The processor 620 may determine to operate as a non-master, based on the result of comparing the master indication attribute included in the response message transmitted by the first external electronic device 520 and the master indication attribute of the electronic device 510. While performing a series of operations so as to be synchronized with the NAN cluster including the first external electronic device 520, the processor 620 may change the characteristics of the discovery window (for example, the discovery window's starting timepoint, interval, and/or duration). As the characteristics of the discovery window are changed, the processor 620 may change schedule information for discovering an electronic device configured to support NAN communication and an electronic device configured to support P2P communication. According to an example, the processor 620 may change schedule information such that the changed duration of the discovery window is included in the time of discovery through a social channel used to perform NAN communication.

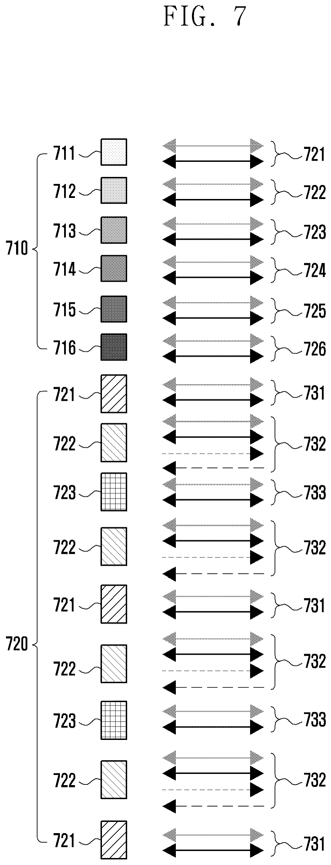

FIG. 7 is a diagram illustrating schedule information used by an electronic device according to an embodiment to discover a first external electronic device and/or a second external electronic device through at least one social channel used to perform a discovery through P2P communication.

The electronic device (for example, the electronic device 510 in FIG. 6) may simultaneously or substantially simultaneously perform an operation of discovering a first external electronic device (for example, the first external electronic device 520 in FIG. 5) configured to support NAN communication and/or an operation of discovering a second external electronic device (for example, the second external electronic device 530 in FIG. 5) configured to support P2P communication. The electronic device 510 may generate (or configure/set) schedule information such that the electronic device 510 can simultaneously or substantially simultaneously perform an operation of discovering a first external electronic device 520 configured to support NAN communication and/or an operation of discovering a second external electronic device 530 configured to support P2P communication.

The schedule information may include a schedule related to simultaneously discovering a first external electronic device 520 configured to support NAN communication and a second external electronic device 530 configured to support P2P communication, and the schedule related to simultaneously discovering a first external electronic device 520 configured to support NAN communication and a second external electronic device 530 configured to support P2P communication may be referred to as a common discovery search schedule (CDSS).

The schedule information may be configured (or set) to include a first period 710 (or a multi-channel schedule period (MCSP)) during which a first external electronic device 520 configured to support NAN communication and a second external electronic device 530 configured to support P2P communication are discovered through multiple channels that can be supported by the electronic device 510 or the communication circuit 610 of the electronic device 510, and a second period 720 (or a social channel schedule period (SCSP)) during which a first external electronic device 520 configured to support NAN communication and a second external electronic device 530 configured to support P2P communication are discovered through at least one social channel used to perform a discovery through P2P communication.

Channels corresponding to the first period 710 may include channels 711, 712, 713, 714, 715, and 716 other than at least one social channel used to perform a discovery through P2P communication among multiple channels that can be supported by the electronic device 510 or the communication circuit (for example, the communication circuit 610 in FIG. 6) of the electronic device 510.

The schedule information may cause the electronic device 510 to discover a first external electronic device 520 configured to support NAN communication and a second external electronic device 530 configured to support P2P communication through multiple channels 711, 712, 713, 714, 715, and 716 that can be supported by the electronic device 510 or the communication circuit 610 of the electronic device 510 during the first period 710.

The electronic device 510 may transmit (or broadcast) (721) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through one channel 711 among multiple channels 711, 712, 713, 714, 715, and 716 that can be supported by the electronic device 510 or the communication circuit (for example, the communication circuit 610 in FIG. 6) of the electronic device 510.

The electronic device 510 may transmit (or broadcast) (722) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through one channel 712 among multiple channels 711, 712, 713, 714, 715, and 716 that can be supported by the electronic device 510 or the communication circuit (for example, the communication circuit 610 in FIG. 6) of the electronic device 510.

The electronic device 510 may transmit (or broadcast) (723) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through one channel 713 among multiple channels 711, 712, 713, 714, 715, and 716 that can be supported by the electronic device 510 or the communication circuit (for example, the communication circuit 610 in FIG. 6) of the electronic device 510.

The electronic device 510 may transmit (or broadcast) (724) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through one channel 714 among multiple channels 711, 712, 713, 714, 715, and 716 that can be supported by the electronic device 510 or the communication circuit (for example, the communication circuit 610 in FIG. 6) of the electronic device 510.

The electronic device 510 may transmit (or broadcast) (725) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through one channel 715 among multiple channels 711, 712, 713, 714, 715, and 716 that can be supported by the electronic device 510 or the communication circuit (for example, the communication circuit 610 in FIG. 6) of the electronic device 510.

The electronic device 510 may transmit (or broadcast) (726) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through one channel 716 among multiple channels 711, 712, 713, 714, 715, and 716 that can be supported by the electronic device 510 or the communication circuit (for example, the communication circuit 610 in FIG. 6) of the electronic device 510.

The schedule information may cause the electronic device 520 to discover a first external electronic device 520 configured to support NAN communication and a second external electronic device 530 configured to support P2P communication through at least one social channel (for example, a first channel 721, a second channel 722, and/or a third channel 733) used to perform a discovery through P2P communication during the second period 720.

The schedule information may be configured to include the order of discoveries through at least one social channel (for example, a first channel 721, a second channel 722, and/or a third channel 733) used to perform a discovery through P2P communication. The order of discoveries may include the order (or sequence) of channels used for discoveries.

According to an example, in case that the at least one social channel used to perform a discovery through P2P communication includes a first channel 721, a second channel 722, and/or a third channel 723, the order of discoveries included in the schedule information may be configured so as to discover a first external electronic device 520 configured to support NAN communication and a second external electronic device 530 configured to support P2P communication through the first channel 721, to discover a first external electronic device 520 configured to support NAN communication and a second external electronic device 530 configured to support P2P communication through the second channel 722, and to discover a first external electronic device 520 configured to support NAN communication and a second external electronic device 530 configured to support P2P communication through the third channel 723. The order of discoveries described above is only an example for description, and may be configured in various manners.

The electronic device 510 may configure the order of discoveries included in the schedule information such that the number of discoveries through a social channel (for example, the second channel 722) used to perform NAN communication among at least one social channel (for example, a first channel 721, a second channel 722, and a third channel 723) used to perform a discovery through P2P communication is larger than the number of discoveries through other social channels. The number of social channels used to perform NAN communication (for example, one (the second channel 722)) may be smaller than the number of social channels used for discoveries through P2P communication (for example, three (the first channel 721, the second channel 722, and the third channel 723)), and the probability of successful discoveries may increase in proportion to the number of social channels.

Therefore, the electronic device 510 may configure the number of discoveries through the second channel 722 which is a social channel used to perform NAN communication to be larger than the number of discoveries through other social channels (for example, the first channel 721 and the third channel 723), thereby increasing the probability of successfully discovering a first external electronic device 520 configured to support NAN communication.

The electronic device 510 may configure the time of discovery through the second channel 722 which is a social channel used to perform NAN communication such that the duration of a discovery window (DW) of the NAN cluster to which the electronic device 510 belongs is included in the time of discovery through the second channel 722 which is a social channel used to perform NAN communication. The social channel used to perform NAN communication and the social channel used for a discovery through P2P communication may have the same frequency band (for example, 2.4 GHz), and the communication circuit 610 may be unable to simultaneously perform the operation of transmitting and/or receiving data through the second channel 722 which is a social channel used to perform NAN communication and the operation of transmitting and/or receiving data through the social channel used for a discovery through P2P communication. In this case, the communication circuit 610 may not simultaneously perform the operation of transmitting and/or receiving data in the discovery window (DW) of the NAN cluster to which the electronic device 510 belongs and the operation of transmitting and/or receiving data through the social channel used for a discovery through P2P communication, and the electronic device 510 may have degraded quality of NAN communication during the period of discovery through P2P communication. Therefore, the electronic device 510 may configure the time of discovery through the social channel used to perform NAN communication such that the duration of the discovery window (DW) of the NAN cluster to which the electronic device 510 belongs is included in the time of discovery through the social channel used to perform NAN communication, thereby minimizing the influence of the operation of discovering the first external electronic device 520 and/or the second external electronic device 530 on the NAN communication.

The electronic device 510 may transmit (or broadcast) (731) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the first channel 721 among at least one social channel 721, 722, and 723 used to perform a discovery through P2P communication.

The electronic device 510 may perform an operation of discovery through the first channel 721 during a designated time, and may then transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication. The electronic device 510 may receive or transmit (732) a beacon from or to at least one electronic device included in the MAN cluster to which the electronic device 510 belongs, in a discovery window duration while discovering an electronic device configured to support NAN communication and/or an electronic device configured to support P2P communication through the second channel 722.

The electronic device 510 may perform an operation of discovery through the second channel 722 during a designated time, and may then transmit (or broadcast) (733) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the third channel 723 among at least one social channel 721, 722, and 723 used to perform a discovery through P2P communication.

The electronic device 510 may perform an operation of discovery through the third channel 723 during a designated time, and may then transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication. The electronic device 510 may receive or transmit (732) a beacon from or to at least one electronic device included in the MAN cluster to which the electronic device 510 belongs, in a discovery window duration while discovering an electronic device configured to support NAN communication and/or an electronic device configured to support P2P communication through the second channel 722.

The electronic device 510 may perform an operation of discovery through the second channel 722 during a designated time, and may then transmit (or broadcast) (731) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the first channel 721 among at least one social channel 721, 722, and 723 used to perform a discovery through P2P communication.

The electronic device 510 may perform an operation of discovery through the first channel 721 during a designated time, and may then transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication. The electronic device 510 may receive or transmit (732) a beacon from or to at least one electronic device included in the MAN cluster to which the electronic device 510 belongs, in a discovery window duration while discovering an electronic device configured to support NAN communication and/or an electronic device configured to support P2P communication through the second channel 722.

The electronic device 510 may perform an operation of discovery through the second channel 722 during a designated time, and may then transmit (or broadcast) (733) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the third channel 723 among at least one social channel 721, 722, and 723 used to perform a discovery through P2P communication.

The electronic device 510 may perform an operation of discovery through the third channel 723 during a designated time, and may then transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication. The electronic device 510 may receive or transmit (732) a beacon from or to at least one electronic device included in the MAN cluster to which the electronic device 510 belongs, in a discovery window duration while discovering an electronic device configured to support NAN communication and/or an electronic device configured to support P2P communication through the second channel 722.

The electronic device 510 may perform an operation of discovery through the second channel 722 during a designated time, and may then transmit (or broadcast) (731) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the first channel 721 among at least one social channel 721, 722, and 723 used to perform a discovery through P2P communication.

The electronic device 510 may repeatedly perform operations 721, 722, 723, 724, 725, and 726 of discovering a first external electronic device 520 configured to support NAN communication and a second external electronic device 530 configured to support P2P communication through multiple channels 711, 712, 713, 714, 715, and 716 that can be supported by the electronic device 510 or the communication circuit 610 of the electronic device 510, and operations 731, 732, and 733 of discovering a first external electronic device 520 configured to support NAN communication and a second external electronic device 530 configured to support P2P communication through at least one social channel (for example, the first channel 721, the second channel 722, and the third channel 723) used to perform a discovery through P2P communication.

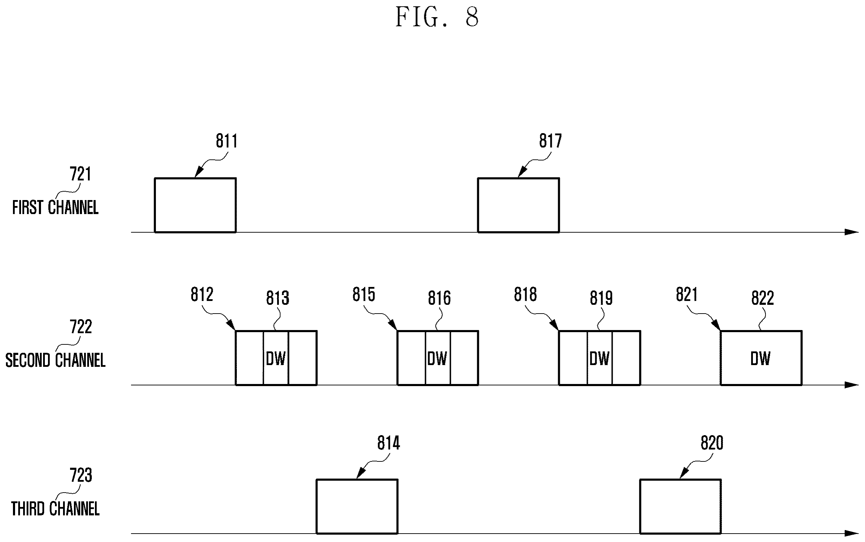

FIG. 8 is a diagram illustrating an example in which an electronic device according to an embodiment discovers a first external electronic device and/or a second external electronic device through at least one social channel used to perform a discovery through P2P communication.

The electronic device (for example, the electronic device 510 in FIG. 6) may simultaneously or substantially simultaneously perform an operation of discovering a first external electronic device (for example, the first external electronic device 520 in FIG. 5) configured to support NAN communication and/or an operation of discovering a second external electronic device (for example, the second external electronic device 530 in FIG. 5) configured to support P2P communication. The electronic device 510 may generate (or configure/set) schedule information such that the electronic device 510 can simultaneously or substantially simultaneously perform an operation of discovering a first external electronic device 520 configured to support NAN communication and/or an operation of discovering a second external electronic device 530 configured to support P2P communication.

The schedule information may be configured (or set) to include a first period (for example, the first period 710 in FIG. 7) (or a multi-channel schedule period (MCSP)) during which a first external electronic device 520 configured to support NAN communication and a second external electronic device 530 configured to support P2P communication are discovered through multiple channels that can be supported by the electronic device 510 or the communication circuit 610 of the electronic device 510, and a second period (for example, the second period 720 in FIG. 7) (or a social channel schedule period (SCSP)) during which a first external electronic device 520 configured to support NAN communication and a second external electronic device 530 configured to support P2P communication are discovered through at least one social channel used to perform a discovery through P2P communication.

FIG. 8 illustrates an example in which the electronic device 510 discovers a first external electronic device 520 configured to support NAN communication and a second external electronic device 530 configured to support P2P communication through at least one social channel used to perform a discovery through P2P communication during the second period 720.

The electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the first channel (for example, the first channel 721 in FIG. 7) among at least one social channel (for example, 721, 722, and 723 in FIG. 7) used to perform a discovery through P2P communication, during a designated time 811.

After performing the operation of discovery through the first channel 721 during the designated time 811, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel (for example, the second channel 722 in FIG. 7) among at least one social channel (for example, 721, 722, and 723 in FIG. 7) used to perform a discovery through P2P communication, during a designated time 812.

The electronic device 510 may receive or transmit a beacon from or to at least one electronic device included in the MAN cluster to which the electronic device 510 belongs, in a discovery window duration 813, while discovering an electronic device configured to support NAN communication and/or an electronic device configured to support P2P communication through the second channel 722. The discovery window duration 813 may be included in the designated time 812 (or in the duration in which an electronic device configured to support NAN communication and/or an electronic device configured to support P2P communication are discovered) through the second channel 722.

After performing the operation of discovery through the second channel 722 during the designated time 812, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the third channel (for example, the third channel 723 in FIG. 7) among at least one social channel 721, 722, and 723 used to perform a discovery through P2P communication, during a designated time 814.

After performing the operation of discovery through the third channel 723 during the designated time 814, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication, during a designated time 815.

The electronic device 510 may receive or transmit a beacon from or to at least one electronic device included in the MAN cluster to which the electronic device 510 belongs, in a discovery window duration 816, while discovering an electronic device configured to support NAN communication and/or an electronic device configured to support P2P communication through the second channel 722. The discovery window duration 816 may be included in the designated time 815 (or in the duration in which an electronic device configured to support NAN communication and/or an electronic device configured to support P2P communication are discovered) through the second channel 722.

After performing the operation of discovery through the second channel 722 during the designated time 815, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the first channel 721 among at least one social channel 721, 722, and 723 used to perform a discovery through P2P communication, during a designated time 817.

After performing the operation of discovery through the first channel 721 during the designated time 817, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication, during a designated time 818.

The electronic device 510 may receive or transmit a beacon from or to at least one electronic device included in the MAN cluster to which the electronic device 510 belongs, in a discovery window duration 819, while discovering an electronic device configured to support NAN communication and/or an electronic device configured to support P2P communication through the second channel 722. The discovery window duration 819 may be included in the designated time 818 (or in the duration in which an electronic device configured to support NAN communication and/or an electronic device configured to support P2P communication are discovered) through the second channel 722.

After performing the operation of discovery through the second channel 722 during the designated time 818, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the third channel 723 among at least one social channel 721, 722, and 723 used to perform a discovery through P2P communication, during a designated time 820.

After performing the operation of discovery through the third channel 723 during the designated time 820, the electronic device 510 may transmit (or broadcast) a service discovery frame (SDF) (for example, subscribe) which is a message for discovering an electronic device (for example, a first external electronic device 520) configured to support NAN communication and/or a probe request message which is a message for discovering an electronic device (for example, a second external electronic device 530) configured to support P2P communication through the second channel 722 among at least one social channel 721, 722, and 723 used to perform a discovery through P2P communication, during a designated time 821.

The electronic device 510 may receive or transmit a beacon from or to at least one electronic device included in the MAN cluster to which the electronic device 510 belongs, in a discovery window duration 822, while discovering an electronic device configured to support NAN communication and/or an electronic device configured to support P2P communication through the second channel 722. The discovery window duration 822 may be included in the designated time 821 (or in the duration in which an electronic device configured to support NAN communication and/or an electronic device configured to support P2P communication are discovered) through the second channel 722.

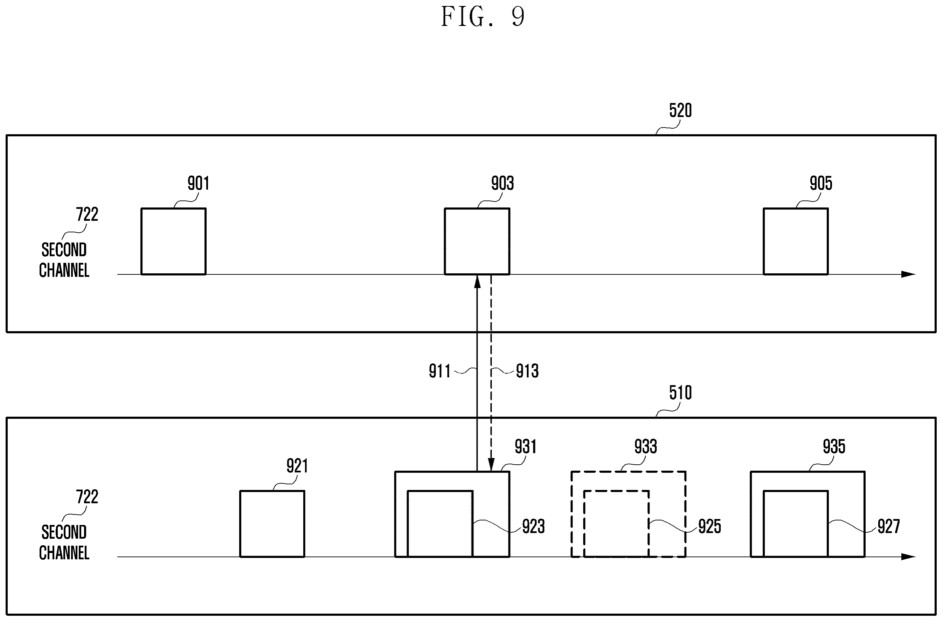

FIG. 9 is a diagram illustrating an example of changing schedule information in case that a first external electronic device is discovered while an electronic device according to an embodiment discovers a first external electronic device and/or a second external electronic device through at least one social channel used to perform a discovery through P2P communication.

The electronic device (for example, the electronic device 510 in FIG. 6) may simultaneously or substantially simultaneously perform an operation of discovering a first external electronic device (for example, the first external electronic device 520 in FIG. 5) configured to support NAN communication and/or an operation of discovering a second external electronic device (for example, the second external electronic device 530 in FIG. 5) configured to support P2P communication. The electronic device 510 may generate (or configure/set) schedule information such that the electronic device 510 can simultaneously or substantially simultaneously perform an operation of discovering a first external electronic device 520 configured to support NAN communication and/or an operation of discovering a second external electronic device 530 configured to support P2P communication.

The electronic device 510 may discover a first external electronic device 520 configured to support NAN communication and a second external electronic device 530 configured to support P2P communication through at least one social channel (for example, the first channel 721, the second channel 722, and/or the third channel 723 in FIG. 7) used to perform a discovery through P2P communication, based on the schedule information.

The electronic device 510 may discover a first external electronic device 520 configured to support NAN communication and a second external electronic device 530 configured to support P2P communication through the second channel 722 (for example, channel no. 6) which is used for NAN communication among at least one social channel used to perform a discovery through P2P communication, based on the schedule information.

Referring to FIG. 9, the electronic device 510 may discover a first external electronic device 520 configured to support NAN communication and/or a second external electronic device 530 configured to support P2P communication during a discovery time 931 configured to include at least one discovery window (for example, 923) among multiple discovery windows 921, 923, and 925.

The electronic device 510 may transmit (or broadcast) a service discovery frame (SDF) (for example, subscribe) 911 which is a message for discovering an electronic device (for example, a first external electronic device 520) configured to support NAN communication and/or a probe request message which is a message for discovering an electronic device (for example, a second external electronic device 530) configured to support P2P communication through the second channel 722 during the designated time 931. The electronic device 510 may stand by to receive a response message transmitted by an electronic device configured to support NAN communication, while discovering an electronic device configured to support NAN communication and/or an electronic device configured to support P2P communication during the specified time 931.

According to an example, upon receiving the subscribe SDF 911 during the discovery window 903, the first external electronic device 520 may transmit a publish SDF 913 to the electronic device 510 in response to the subscribe SDF 911. The publish SDF 913 may include information of the first external electronic device 520 related to NAN communication. According to an example, the information of the first external electronic device 520 related to NAN communication may include at least one from among the name of a service activated in the first external electronic device 520, identification information of the service, the name of the first external electronic device 520, identification information of the first external electronic device 520, and an information element (IE) related to NAN communication. The information element related to NAN communication may include a master indication attribute which is a parameter used to determine whether the first external electronic device 520 is to operate as the master of the NAN cluster or not, and/or characteristics of the NAN cluster to which the first external electronic device 520 belongs.

According to an example, upon receiving the publish SDF during the discovery window 903, the first external electronic device 520 may transmit a follow-up SDF to the electronic device 510 as a message in response to the publish SDF.

The follow-up SDF may include information of the first external electronic device 520 related to NAN communication. According to an example, the information of the first external electronic device 520 related to NAN communication may include at least one from among the name of a service activated in the first external electronic device 520, identification information of the service, the name of the first external electronic device 520, identification information of the first external electronic device 520, and an information element (IE) related to NAN communication. The information element related to NAN communication may include a master indication attribute which is a parameter used to determine whether the first external electronic device 520 is to operate as the master of the NAN cluster or not, and/or characteristics of the NAN cluster to which the first external electronic device 520 belongs.

The electronic device 510 may succeed in discovering a first external electronic device 520 configured to support NAN communication in case that the publish SDF 913 or follow-up SDF is received from the first external electronic device 520.

The electronic device 510 may control the communication circuit 610 so as to automatically connect to the discovered electronic device (for example, the first external electronic device 520).

Alternatively, upon receiving a user input for connecting the discovered electronic device (for example, the first external electronic device 520), the electronic device 510 may control the communication circuit 610 so as to connect to the first external electronic device 520.

The processor 620 may control the communication circuit 610 so as to connect to the first external electronic device 520 through NAN communication, based on information included in the publish SDF transmitted by the first external electronic device 520.

The processor 620 may perform NAN cluster synchronization with the first external electronic device 520 in the process of connecting to the first external electronic device 520 through NAN communication,

The NAN cluster synchronization may include an operation of receiving time clock information of the electronic device which represents the NAN (or the master device of the NAN cluster) cluster such that electronic devices included in the NAN cluster 200 transmit and/or receive data in the same channel and/or during the same time. For example, the electronic device 510 may receive a beacon broadcast by the first external electronic device 520 and may perform NAN cluster synchronization, based on the time clock information of the first external electronic device 520 included in the beacon. The processor 620 may determine that the electronic device 510 is to operate as a non-master, based on the result of comparing the master indication attribute included in the response message transmitted by the first external electronic device 520 and the master indication attribute of the electronic device 510.

While performing a series of operations so as to be synchronized with the NAN cluster including the first external electronic device 520, the electronic device 510 may change the characteristics of the discovery window (for example, the discovery window's starting timepoint, interval, and duration).

Referring to FIG. 9, the electronic device 510 may change the characteristics of the discovery window 925 before synchronization, thereby configuring the characteristics of the discovery window 927 after synchronization to be identical to the discovery window 905 of the first external electronic device 520.

As the characteristics of the discovery window 925 are changed, the electronic device 510 may change schedule information for discovering an electronic device configured to support NAN communication and an electronic device configured to support P2P communication.

According to an example, the electronic device 510 may change the schedule information (or the discovery time 935) such that the duration of the discovery window 927 after synchronization is included in the time 935 of discovery through a social channel used to perform NAN communication. Referring to FIG. 9, the discovery time 933 before synchronization and the discovery time 935 after synchronization may differ.

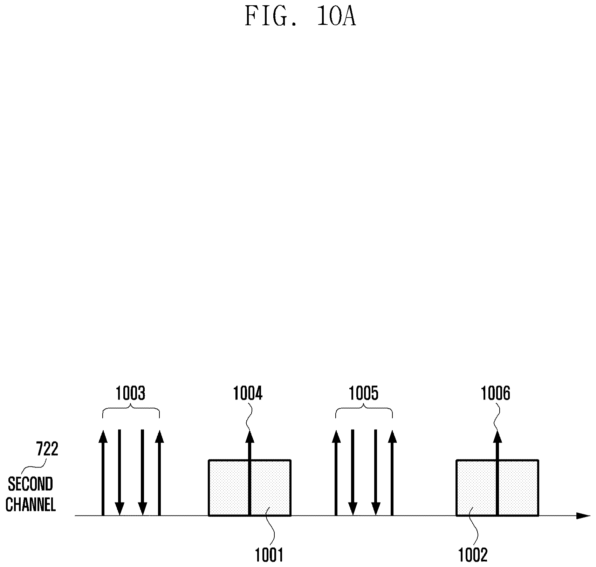

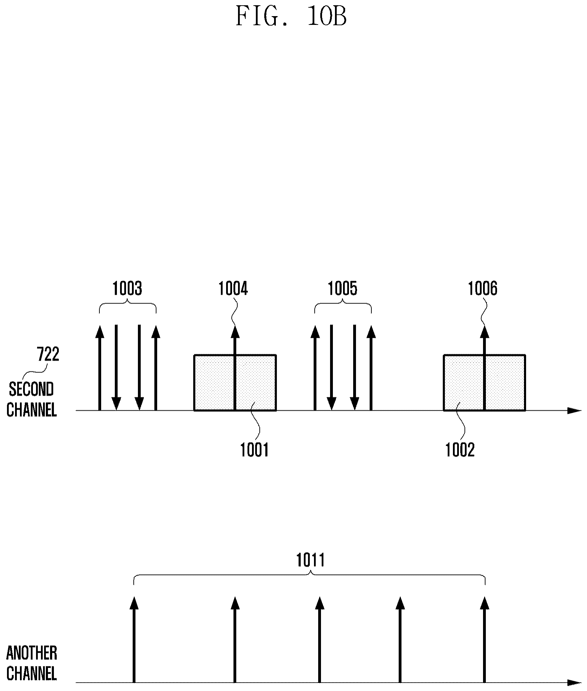

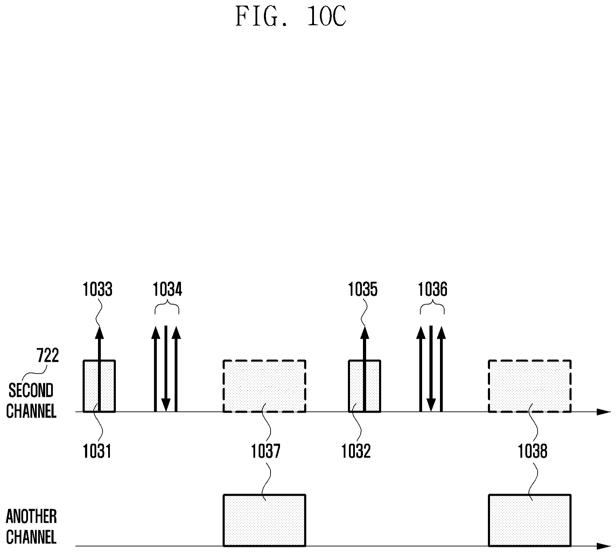

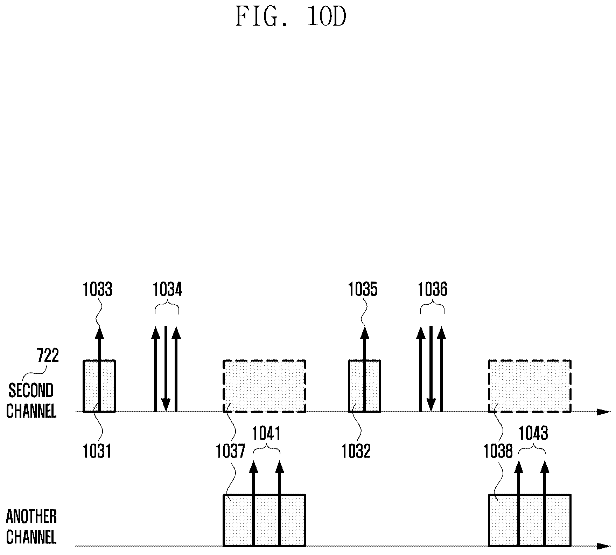

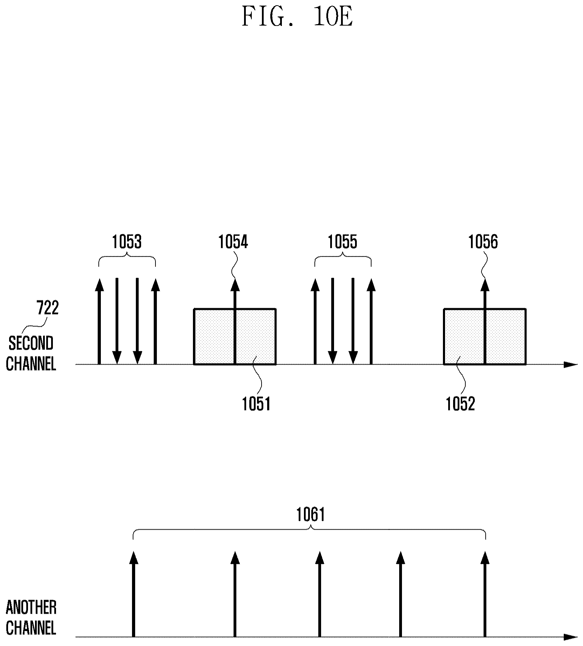

FIG. 10A, FIG.10B, FIG. 10C, FIG. 10D, and FIG. 10E are diagrams illustrating schedule information according to which an electronic device according to an embodiment awaits a discovery through at least one social channel used to perform a discovery through P2P communication.

The electronic device (for example, the electronic device 510 in FIG. 6) may simultaneously or substantially simultaneously perform an operation of discovering a first external electronic device (for example, the first external electronic device 520 in FIG. 5) configured to support NAN communication and/or an operation of discovering a second external electronic device (for example, the second external electronic device 530 in FIG. 5) configured to support P2P communication. The electronic device 510 may generate (or configure/set) schedule information such that the electronic device 510 can simultaneously or substantially simultaneously perform an operation of discovering a first external electronic device 520 configured to support NAN communication and/or an operation of discovering a second external electronic device 530 configured to support P2P communication.

Alternatively, the electronic device 510 may generate (or configure/set) schedule information for an operation of standing by to receive messages (or signals) transmitted by a first external electronic device 520 configured to support NAN communication and a second external electronic device 530 configured to support P2P communication (or an operation of causing the first external electronic device 520 and/or the second external electronic device 530 to await a discovery by the electronic device 510). The schedule information may include a schedule (for example, a common discovery search schedule (CDSS)) related to simultaneously discovering a first external electronic device 520 configured to support NAN communication and a second external electronic device 530 configured to support P2P communication, and/or a schedule related to receiving a signal (for example, subscribe SDF) related to a discovery transmitted by a first external electronic device 520 configured to support NAN communication and/or a signal (for example, a probe request message) related to a discovery transmitted by a second external electronic device 530 configured to support P2P communication. The schedule related to the operation of receiving messages (or signals) transmitted by a first external electronic device 520 configured to support NAN communication and a second external electronic device 530 configured to support P2P communication may also be referred to as a common discovery listen schedule (CDLS).

The electronic device 510 may repeatedly perform an operation of transmitting messages (or signals) for discovering a first external electronic device 520 configured to support NAN communication and a second external electronic device 530 configured to support P2P communication, and an operation of standing by to receive messages (or signals) transmitted by a first external electronic device 520 configured to support NAN communication and a second external electronic device 530 configured to support P2P communication.

Hereinafter, an example in which the electronic device 510 configures schedule information for an operation of standing by to receive messages (or signals) transmitted by a first external electronic device 520 configured to support NAN communication and a second external electronic device 530 configured to support P2P communication (or an operation in which the first external electronic device 520 and/or the second external electronic device 530 awaits a discovery by the electronic device 510) will be described.

The electronic device 510 (or the processor (for example, the processor 620 in FIG. 6)) may configure schedule information for an operation of standing by to receive messages (or signals) transmitted by a first external electronic device 520 configured to support NAN communication and a second external electronic device 530 configured to support P2P communication, based on the performance of the communication circuit (for example, the communication circuit 610 in FIG. 6) and whether the electronic device 510 is connected to another external electronic device (for example, an access point (AP)) or not. The performance of the communication circuit 610 may include performance related to whether the communication circuit 610 can simultaneously transmit and/or receive signals in multiple frequency bands (for example, 2.4 GHz, 5 GHz, or 6 GHz).

According to an example, the electronic device 510 (or the processor 620) may configure schedule information so as to perform an operation of standing by to receive messages (or signals) transmitted by a first external electronic device 520 configured to support NAN communication and a second external electronic device 530 configured to support P2P communication through the second channel (for example, the second channel 722 in FIG. 7) in case that the electronic device 510 is not connected to another external electronic device, and in case that the communication circuit 610 cannot simultaneously transmit and/or receive signals in multiple frequency bands (for example, in case that the communication circuit 610 is a non-real simultaneous dual band (RSDB)).

Referring to FIG. 10A, the electronic device 510 may configure schedule information so as to stand by to receive messages (or signals) transmitted by a first external electronic device 520 configured to support NAN communication and a second external electronic device 530 configured to support P2P communication and/or to transmit a message 1003 for discovering a first external electronic device 520 configured to support NAN communication and a message 1005 for discovering a second external electronic device 530 configured to support P2P communication, in durations other than discovery windows 1001 and 1002. The electronic device 510 may configure schedule information so as to transmit or receive beacons 1004 and 1006 related to NAN communication in the discovery windows 1001 and 1002.

According to an example, the electronic device 510 (or the processor 620) may configure schedule information so as to perform an operation of standing by to receive messages (or signals) transmitted by a first external electronic device 520 configured to support NAN communication and a second external electronic device 530 configured to support P2P communication through the second channel 722 and another channel in case that the electronic device 510 is not connected to another external electronic device, and in case that the communication circuit 610 can simultaneously transmit and/or receive signals in multiple frequency bands (for example, in case that the communication circuit 610 is a real simultaneous dual band (RSDB)). As used herein, another channel may refer to a channel that enables the communication circuit 610 to simultaneously transmit and/or receive signals through the second channel 722.

Referring to FIG. 10B, the electronic device 510 may configure schedule information so as to stand by to receive messages (or signals) transmitted by a first external electronic device 520 configured to support NAN communication and a second external electronic device 530 configured to support P2P communication, to transmit a message 1003 for discovering a first external electronic device 520 configured to support NAN communication and a message 1005 for discovering a second external electronic device 530 configured to support P2P communication, and to stand by to receive messages (or signals) 1011 transmitted by a first external electronic device 520 configured to support NAN communication and a second external electronic device 530 configured to support P2P communication through another channel, in durations other than discovery windows 1001 and 1002. The frequency band of the other channel may differ from the frequency band of the second channel 722. The electronic device 510 may configure schedule information so as to transmit or receive beacons 1004 and 1006 related to NAN communication in the discovery windows 1001 and 1002.

According to an example, the electronic device 510 (or the processor 620) may configure schedule information so as to perform an operation of standing by to receive messages (or signals) transmitted by a first external electronic device 520 configured to support NAN communication and a second external electronic device 530 configured to support P2P communication through the second channel (for example, the second channel 722 in FIG. 7), in durations other than time intervals in which the electronic device 510 and/or another external electronic device transmit and/or receive data through another channel, in case that the electronic device 510 is connected to another external electronic device, and in case that the communication circuit 610 cannot simultaneously transmit and/or receive signals in multiple frequency bands (for example, in case that the communication circuit 610 is a non-real simultaneous dual band (RSDB)).

Referring to FIG. 10C, the electronic device 510 may configure schedule information so as to stand by to receive messages (or signals) 1034 and 1036 transmitted by a first external electronic device 520 configured to support NAN communication and a second external electronic device 530 configured to support P2P communication, or to transmit a message 1034 for discovering a first external electronic device 520 configured to support NAN communication and a message 1036 for discovering a second external electronic device 530 configured to support P2P communication, in durations other than time intervals 1037 and 1038 in which the electronic device 510 and/or another external electronic device transmit and/or receive data through another channel. The electronic device 510 may configure schedule information so as to transmit or receive beacons 1033 and 1035 related to NAN communication in the discovery windows 1031 and 1032.

According to an example, the electronic device 510 (or the processor 620) may configure schedule information so as to perform an operation of standing by to receive messages (or signals) transmitted by a first external electronic device 520 configured to support NAN communication and a second external electronic device 530 configured to support P2P communication through the second channel (for example, the second channel 722 in FIG. 7), in durations other than time intervals in which the electronic device 510 and/or another external electronic device transmit and/or receive data through another channel, and to stand by to receive messages (or signals) transmitted by a first external electronic device 520 configured to support NAN communication and a second external electronic device 530 configured to support P2P communication through another channel during time intervals in which the electronic device 510 and/or another external electronic device transmit and/or receive data through another channel, in case that the electronic device 510 is connected to another external electronic device, and in case that the communication circuit 610 cannot simultaneously transmit and/or receive signals in multiple frequency bands (for example, in case that the communication circuit 610 is a non-real simultaneous dual band (RSDB)).

Referring to FIG. 10D, the electronic device 510 may configure schedule information so as to stand by to receive messages (or signals) 1034 and 1036 transmitted by a first external electronic device 520 configured to support NAN communication and a second external electronic device 530 configured to support P2P communication, or to transmit a message 1034 for discovering a first external electronic device 520 configured to support NAN communication and a message 1036 for discovering a second external electronic device 530 configured to support P2P communication, in durations other than time intervals 1037 and 1038 in which the electronic device 510 and/or another external electronic device transmit and/or receive data through another channel. The electronic device 510 may configure schedule information so as to stand by to receive messages (or signals) 1041 and 1043 transmitted by a first external electronic device 520 configured to support NAN communication and a second external electronic device 530 configured to support P2P communication through another channel during the time intervals 1037 and 1038 in which the electronic device 510 and/or another external electronic device transmit and/or receive data through another channel. The electronic device 510 may configure schedule information so as to transmit or receive beacons 1033 and 1035 related to NAN communication in the discovery windows 1031 and 1032.

According to an example, the electronic device 510 (or the processor 620) may configure schedule information so as to perform an operation of standing by to receive messages (or signals) transmitted by a first external electronic device 520 configured to support NAN communication and a second external electronic device 530 configured to support P2P communication through the second channel 722 and another channel in case that the electronic device 510 is connected to another external electronic device, and in case that the communication circuit 610 can simultaneously transmit and/or receive signals in multiple frequency bands (for example, in case that the communication circuit 610 is a real simultaneous dual band (RSDB)). As used herein, another channel may refer to a channel that enables the communication circuit 610 to simultaneously transmit and/or receive signals through the second channel 722. As used herein, another channel may refer to a channel used to exchange messages related to a connection to another external electronic device other than the first external electronic device 520 and the second external electronic device 530.

Referring to FIG. 10E, the electronic device 510 may configure schedule information so as to stand by to receive messages (or signals) transmitted by a first external electronic device 520 configured to support NAN communication and a second external electronic device 530 configured to support P2P communication, to transmit a message 1053 for discovering a first external electronic device 520 configured to support NAN communication and a message 1055 for discovering a second external electronic device 530 configured to support P2P communication, and to stand by to receive messages (or signals) 1061 transmitted by a first external electronic device 520 configured to support NAN communication and a second external electronic device 530 configured to support P2P communication through another channel, in durations other than discovery windows 1051 and 1052. The electronic device 510 may configure schedule information so as to transmit or receive beacons 1054 and 1056 related to NAN communication in the discovery windows 1051 and 1052.

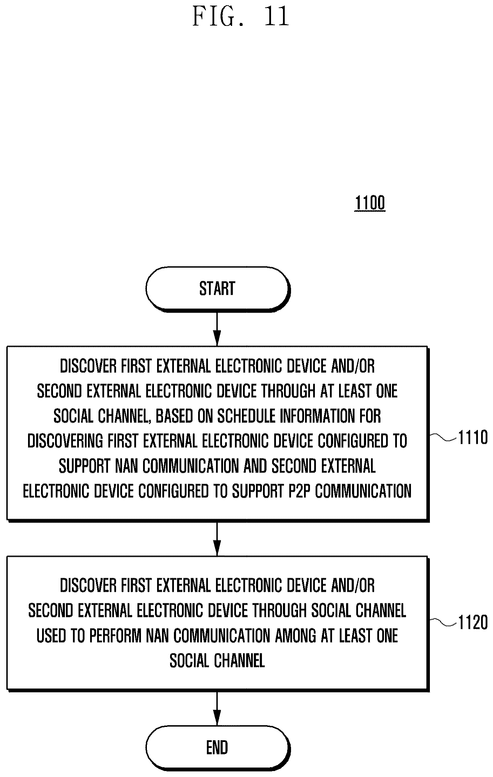

FIG. 11 is a flowchart 1100 illustrating a method for operating an electronic device according to an embodiment.

In operation 1110, based on schedule information for discovering a first external electronic device (for example, the first external electronic device 520 in FIG. 5) configured to support NAN communication and/or a second external electronic device (for example, the second external electronic device 530 in FIG. 5) configured to support P2P communication, the electronic device (for example, the electronic device 510 in FIG. 6) may discover a first external electronic device 520 and/or a second external electronic device 530 through at least one social channel.

The electronic device 510 may control the communication circuit 610 such that an operation of discovering a first external electronic device 520 configured to support NAN communication and/or an operation of discovering a second external electronic device 530 configured to support P2P communication can be performed simultaneously or substantially simultaneously. The electronic device 510 may control the communication circuitry 610 so as to activate both a NAN communication interface implemented by hardware and/or software components of the communication circuit 610 and a P2P communication interface implemented by hardware and/or software components of the communication circuit 610. The NAN communication interface and the P2P communication interface may be activated simultaneously or successively.

The electronic device 510 may control the communication circuitry 610 so as to activate the NAN communication interface and the P2P communication interface and to perform an operation of discovering a first external electronic device 520 configured to support NAN communication and a second external electronic device 530 configured to support P2P communication through at least one social channel (for example, channel no. 1, channel no. 6, and channel no. 11) used to perform a discovery through P2P communication and/or at least one channel used to perform transmission and/or reception of data.

The electronic device 510 may perform an operation of discovering a first external electronic device 520 configured to support NAN communication and a second external electronic device 530 configured to support P2P communication, according to schedule information (or based on schedule information) related to the operation of discovering a first external electronic device 520 configured to support NAN communication and a second external electronic device 530 configured to support P2P communication. The schedule information may include a schedule related to simultaneously discovering a first external electronic device 520 configured to support NAN communication and a second external electronic device 530 configured to support P2P communication, and the schedule related to simultaneously discovering a first external electronic device 520 configured to support NAN communication and a second external electronic device 530 configured to support P2P communication may also be referred to as a common discovery search schedule (CDSS).

The schedule information may be configured (or set) to include a first period (or a multi-channel schedule period (MCSP)) during which a first external electronic device 520 configured to support NAN communication and a second external electronic device 530 configured to support P2P communication are discovered through multiple channels that can be supported by the electronic device 510 or the communication circuit 610 of the electronic device 510, and a second period (or a social-channel schedule period (SCSP)) during which a first external electronic device 520 configured to support NAN communication and a second external electronic device 530 configured to support P2P communication are discovered through at least one social channel used to perform a discovery through P2P communication. Channels corresponding to the first period may include a channel other than at least one social channel used to perform a discovery through P2P communication among multiple channels that can be supported by the electronic device 510 or the communication circuit 610 of the electronic device 510. The schedule information may cause the electronic device 510 to discover a first external electronic device 520 configured to support NAN communication and a second external electronic device 530 configured to support P2P communication through multiple channels that can be supported by the electronic device 510 or the communication circuit 610 of the electronic device 510 during the first period, and may cause the electronic device 520 to discover a first external electronic device 520 configured to support NAN communication and a second external electronic device 530 configured to support P2P communication through at least one social channel used to perform a discovery through P2P communication during the second period.

The electronic device 510 may repeatedly perform an operation of discovering a first external electronic device 520 configured to support NAN communication and a second external electronic device 530 configured to support P2P communication through multiple channels that can be supported by the electronic device 510 or the communication circuit 610 of the electronic device 510, and an operation of discovering a first external electronic device 520 configured to support NAN communication and a second external electronic device 530 configured to support P2P communication through at least one social channel used to perform a discovery through P2P communication.

The schedule information may be configured to include the order of discoveries through at least one social channel used to perform a discovery through P2P communication. The order of discoveries may include the order (or sequence) of channels used for the discoveries.

According to an example, in case that the at least one social channel used to perform a discovery through P2P communication includes a first channel (for example, channel no. 1), a second channel (for example, channel no. 6), and/or a third channel (for example, channel no. 11), the order of discoveries included in the schedule information may be configured such that a first external electronic device 520 configured to support NAN communication and a second external electronic device 530 configured to support P2P communication are discovered through the first channel, a first external electronic device 520 configured to support NAN communication and a second external electronic device 530 configured to support P2P communication are discovered through the second channel, and a first external electronic device 520 configured to support NAN communication and a second external electronic device 530 configured to support P2P communication are discovered through the third channel. The above-described order is only an example for descriptions, and may be configured in various manners.

The electronic device 510 may configure the order of discoveries included in the schedule information such that the number of discoveries through a social channel (for example, channel no. 2) used to perform NAN communication, among the at least one social channel used to perform a discovery through P2P communication, is larger than the number of discoveries through other social channels. The number of social channels used to perform NAN communication (for example, one channel (channel no. 6)) may be smaller than the number of social channels used for discoveries through P2P communication (for example, three channels (channel nos. 1, 6, and 11)), and the probability of successful discoveries may increase in proportion to the number of social channels. Therefore, the electronic device 510 may configure the number of discoveries through social channels used to perform NAN communication to be larger than the number of discoveries through other social channels, thereby increasing the probability of successfully discovering a first external electronic device 520 configured to support NAN communication.

According to an example, the electronic device 510 may configure the order of discoveries included in the schedule information such that a first external electronic device 520 configured to support NAN communication and a second external electronic device 530 configured to support P2P communication are discovered through the first channel, a first external electronic device 520 configured to support NAN communication and a second external electronic device 530 configured to support P2P communication are discovered through the second channel, a first external electronic device 520 configured to support NAN communication and a second external electronic device 530 configured to support P2P communication are discovered through the third channel, and a first external electronic device 520 configured to support NAN communication and a second external electronic device 530 configured to support P2P communication are discovered through the second channel.

Based on schedule information for discovering a first external electronic device 520 configured to support NAN communication and a second external electronic device 530 configured to support P2P communication through at least one social channel used to perform a discovery through P2P communication, the electronic device 510 may discover a first external electronic device 520 and/or a second external electronic device 530 through at least one social channel.

The operation of discovering a first external electronic device 520 and/or a second external electronic device 530 through at least one social channel may include an operation of transmitting (or broadcasting) a service discovery frame (SDF) (for example, publish) which is a message for discovering an electronic device (for example, a first external electronic device 520) configured to support NAN communication and/or an operation of transmitting (or broadcasting) a probe request message which is a message for discovering an electronic device (for example, a second external electronic device 530) configured to support P2P communication.

In operation 1120, the electronic device 510 may discover a first external electronic device 520 and/or a second external electronic device 530 through a social channel (for example, the second channel 722 in FIG. 7) used to perform NAN communication among at least one social channel.

The electronic device 510 may configure the time of discovery through social channels used to perform NAN communication such that the duration of a discovery window (DW) of the NAN cluster to which the electronic device 510 belongs is included in the time of discovery through social channels used to perform NAN communication. Social channels used to perform NAN communication and social channels used for discoveries through P2P communication may have the same frequency band (for example, 2.4 GHz), and the communication circuit 610 may be unable to simultaneously performing operations of transmission and/or reception of data through social channels used to perform NAN communication and operations of transmission and/or reception of data through social channels used for discoveries through P2P communication. In this case, the communication circuit 610 may be unable to simultaneously performing operations of transmission and/or reception of data in the discovery window (DW) of the NAN cluster to which the electronic device 510 belongs, and operations of transmission and/or reception of data through social channels used for discoveries through P2P communication, and the electronic device 510 may have degraded quality of NAN communication during the period of discovery through P2P communication. Therefore, the electronic device 510 may configure the time of discovery through social channels used to perform NAN communication such that the duration of the discovery window (DW) of the NAN cluster to which the electronic device 510 belongs is included in the time of discovery through social channels used to perform NAN communication, thereby minimizing the influence of operations of discovering a first external electronic device 520 and/or a second external electronic device 530 on the NAN communication.

The electronic device 510 may discover a first external electronic device 520 and/or a second external electronic device 530 during a time other than the discovery window configured for the NAN cluster to which the electronic device 510 belongs, among the time of discovery through a social channel (for example, a second channel) used to perform NAN communication.

The operation of discovering a first external electronic device 520 and/or a second external electronic device 530 through a social channel used to perform NAN communication may include an operation of transmitting (or broadcasting) a service discovery frame (SDF) (for example, publish) which is a message for discovering an electronic device (for example, a first external electronic device 520) configured to support NAN communication and/or an operation of transmitting (or broadcasting) a probe request message which is a message for discovering an electronic device (for example, a second external electronic device 530) configured to support P2P communication.

The SDF which is a message for discovering an electronic device configured to support NAN communication may refer to a subscribe SDF. The subscribe SDF may include information of an electronic device 510 related to NAN communication. According to an example, the information of an electronic device 510 related to NAN communication may include at least one from among the name of a service activated in the electronic device 510, identification information of the service, the name of the electronic device 510, identification information of the electronic device 510, and an information element (IE) related to NAN communication. The information element related to NAN communication may include a master indication attribute which is a parameter used to determine whether the electronic device 510 is to operate as the master of the NAN cluster or not, and/or characteristics of the NAN cluster to which the electronic device 510 belongs.

Upon receiving the subscribe SDF, the first external electronic device 520 may transmit a publish SDF to the electronic device 510 as a message in response to the subscribe SDF.

The publish SDF may include information of a first external electronic device 520 related to NAN communication. According to an example, the information of a first external electronic device 520 related to NAN communication may include at least one from among the name of a service activated in the first external electronic device 520, identification information of the service, the name of the first external electronic device 520, identification information of the first external electronic device 520, and an information element (IE) related to NAN communication. The information element related to NAN communication may include a master indication attribute which is a parameter used to determine whether the first external electronic device 512 is to operate as the master of the NAN cluster or not, and/or characteristics of the NAN cluster to which the first external electronic device 520 belongs.

The electronic device 510 may successfully discover an electronic device configured to support NAN communication in case of receiving the publish SDF from the first external electronic device 520.

The message for discovering an electronic device configured to support P2P communication may be implemented as a probe request message, and the probe request message may include information of an electronic device 510 related to P2P communication. According to an example, the information of an electronic device 510 related to P2P communication may include at least one from among the name of a service activated in the electronic device 510, identification information of the service, the name of the electronic device 510, identification information of the electronic device 510, and an information element (IE) related to P2P communication. The information element related to P2P communication may include a group owner (GO) intent used to determine whether the electronic device 510 is to operate as the owner of the P2P group or not and/or characteristics of the P2P group to which the electronic device 510 belongs.

Upon receiving the probe request message, the second external electronic device 530 may transmit a probe response message corresponding to the probe request message to the electronic device 510.

The probe response message may include information of a second external electronic device 530 related to P2P communication. According to an example, the information of a second external electronic device 530 related to P2P communication may include at least one from among the name of a service activated in the second external electronic device 530, identification information of the service, the name of the second external electronic device 530, identification information of the second external electronic device 530, and/or an information element (IE) related to P2P communication. The information element related to P2P communication may include a group owner (GO) intent used to determine whether the second external electronic device 530 is to operate as the owner of the P2P group or not and/or characteristics of the P2P group to which the second external electronic device 530 belongs.

The electronic device 510 may successfully discover an electronic device configured to support NAN communication in case of receiving the probe response message from the second external electronic device 530.

Although the probe request message and/or the probe response message have been described as examples of messages exchanged in the process of discovering a second external electronic device 530, the disclosure may not be limited thereto. According to an example, the electronic device 510 may transmit a service discovery frame (for example, a subscribe SDF) to discover a second external electronic device 530, and the second external electronic device 530 may transmit a service discovery frame (for example, a publish SDF) to the electronic device 510 as a response message.

The electronic device 510 may provide information of discovered electronic devices (for example, a first external electronic device 520 and a second external electronic device 530) to the user. According to an example, the electronic device 510 may display the information of discovered electronic devices on the display (for example, the display module 160 in FIG. 1) of the electronic device 510.

The electronic device 510 may control the communication circuit 610 so as to automatically connect to discovered electronic devices (for example, a first external electronic device 520 and a second external electronic device 530).

Alternatively, upon receiving a user input for selecting at least one external electronic device from discovered electronic devices (for example, a first external electronic device 520 and a second external electronic device 530), the electronic device 510 may control the communication circuit 610 so as to connect to the selected external electronic device.

The electronic device 510 may control the communication circuit 610 so as to connect to the first external electronic device 520 through NAN communication, based on information included in the publish SDF transmitted by the first external electronic device 520. The electronic device 510 may control the communication circuit 610 so as to connect to the second external electronic device 530 through P2P communication, based on information included in the probe response message transmitted by the second external electronic device 530.

The electronic device 510 may perform NAN cluster synchronization with the first external electronic device 520 in the process of connecting to the first external electronic device 520 through NAN communication.

The NAN cluster synchronization may include an operation of receiving time clock information of the electronic device which represents the NAN (or the master device of the NAN cluster) such that electronic devices included in the NAN cluster 200 transmit and/or receive data in the same channel and/or during the same time. For example, the electronic device 510 may receive a beacon broadcast by the first external electronic device 520 and may perform NAN cluster synchronization, based on the time clock information of the first external electronic device 520 included in the beacon. The electronic device 510 may determine to operate as a non-master, based on the result of comparing the master indication attribute included in the response message transmitted by the first external electronic device 520 and the master indication attribute of the electronic device 510. While performing a series of operations so as to be synchronized with the NAN cluster including the first external electronic device 520, the electronic device 510 may change the characteristics of the discovery window (for example, the discovery window's starting timepoint, interval, and/or duration). As the characteristics of the discovery window are changed, the electronic device 510 may change schedule information for discovering an electronic device configured to support NAN communication and an electronic device configured to support P2P communication. According to an example, the electronic device 510 may change schedule information such that the changed duration of the discovery window is included in the time of discovery through a social channel used to perform NAN communication.

The electronic device 510 according to an embodiment may include a communication circuit 610 configured to support neighbor awareness network (NAN) communication and P2P communication different from the NAN communication. The electronic device 510 may include a processor 620. The electronic device 510 may include a memory. The memory may store instructions which, when executed by the processor 620, cause the electronic device 510 to, based on schedule information for discovering a first external electronic device 520 configured to support the NAN communication and a second external electronic device 530 configured to support the P2P communication through at least one channel including at least one social channel 721, 722, and 723 used to perform a discovery through P2P communication, discover the first external electronic device 520 and/or the second external electronic device 530 through the at least one social channel 721, 722, and 723. The memory may store instructions which cause the electronic device 510 to, based on the schedule information, discover the first external electronic device 520 and/or the second external electronic device 530 through a social channel 722 used to perform the NAN communication among the at least one social channel 721, 722, and 723.

In connection with the electronic device 510 according to an example, the schedule information may be configured to include the order of discoveries through the at least one social channel 721, 722, and 723.

In connection with the electronic device 510 according to an example, the schedule information may be configured such that the number of discoveries through a social channel 722 used to perform the NAN communication is larger than the number of discoveries through the at least one social channel 721 and 723.

In connection with the electronic device 510 according to an example, the schedule information may be configured such that the time of discovery through a social channel 722 used to perform the NAN communication is longer than the time of discovery through the at least one social channel 721 and 723.

In connection with the electronic device 510 according to an example, the schedule information may be configured such that the time of discovery through a social channel 722 used to perform the NAN communication includes a duration of a discovery window configured for a NAN cluster including the electronic device.

In connection with the electronic device 510 according to an example, the memory may be configured to further store an instruction such that the first external electronic device 520 and the second external electronic device 530 are discovered during a time other than a discovery window configured for a NAN cluster including the electronic device among the time of discovery through a social channel 722 used to perform the NAN communication.

In connection with the electronic device 510 according to an example, the memory may be configured to further store an instruction such that a service discovery frame for discovering the first external electronic device 520 is transmitted and/or a probe request message for discovering the second external electronic device 530 is transmitted during a time other than a discovery window configured for a NAN cluster including the electronic device among the time of discovery through a social channel 722 used to perform the NAN communication.

In connection with the electronic device 510 according to an example, the memory may further store an instruction such that, as the first external electronic device 520 is successfully discovered, a NAN cluster including the first external electronic device 520 and the electronic device is configured. The memory may further store an instruction such that, in case that characteristics of a discovery window are changed according to the configuration of the NAN cluster, the schedule information is changed.

In connection with the electronic device 510 according to an example, the memory may be configured to further store an instruction to change the schedule information such that the period of time for which the first external electronic device 520 and/or the second external electronic device 530 are discovered through a social channel 722 used to perform the NAN communication includes the duration of the discovery window.

In connection with the electronic device 510 according to an example, the memory may be configured to further store an instruction such that the first external electronic device 520 and the second external electronic device 530 are discovered through at least one channel supported by the communication circuit 610.

A method for operating an electronic device 510 according to an example may include an operation of, based on schedule information for discovering a first external electronic device 520 configured to support NAN communication and a second external electronic device 530 configured to support P2P communication through at least one channel including at least one social channel 721, 722, and 723 used to perform a discovery through the P2P communication, discovering the first external electronic device 520 and/or the second external electronic device 530 through the at least one social channel 721, 722, and 723. The method for operating an electronic device 510 may include an operation of, based on the schedule information, discovering the first external electronic device 520 and/or the second external electronic device 530 through a social channel 722 used to perform the NAN communication among the at least one social channel.

In connection with the method for operating an electronic device 510 according to an example, the schedule information may be configured to include the order of discoveries through the at least one social channel 721, 722, and 723.

In connection with the method for operating an electronic device 510 according to an example, the schedule information may be configured such that the number of discoveries through a social channel 722 used to perform the NAN communication is larger than the number of discoveries through the at least one social channel 721, 722, and 723.

In connection with the method for operating an electronic device 510 according to an example, the schedule information may be configured such that the time of discovery through a social channel 722 used to perform the NAN communication is longer than the time of discovery through the at least one social channel 721, 722, and 723.

In connection with the method for operating an electronic device 510 according to an example, the schedule information may be configured such that the time of discovery through a social channel 722 used to perform the NAN communication includes a duration of a discovery window configured for a NAN cluster including the electronic device.

In connection with the method for operating an electronic device 510 according to an example, the operation of discovering the first external electronic device 520 and/or the second external electronic device 530 through a social channel 722 used to perform the NAN communication may include an operation of discovering the first external electronic device 520 and the second external electronic device 530 during a time other than a discovery window configured for a NAN cluster including the electronic device among the time of discovery through a social channel 722 used to perform the NAN communication.

In connection with the method for operating an electronic device 510 according to an example, the operation of discovering the first external electronic device 520 and/or the second external electronic device 530 through a social channel used to perform the NAN communication may include an operation of transmitting a service discovery frame for discovering the first external electronic device 520 and/or transmitting a probe request message for discovering the second external electronic device 530 during a time other than a discovery window configured for a NAN cluster including the electronic device among the time of discovery through a social channel 722 used to perform the NAN communication.

The method for operating an electronic device 510 according to an example may further include an operation in which, as the first external electronic device 520 is successfully discovered, a NAN cluster including the first external electronic device 520 and the electronic device is configured. The method for operating an electronic device 510 according to an example may further include an operation in which, in case that characteristics of a discovery window are changed according to the configuration of the NAN cluster, the schedule information is changed.

In connection with the method for operating an electronic device 510 according to an example, the operation of changing the schedule information may include an operation of changing the schedule information such that the period of time for which the first external electronic device 520 and/or the second external electronic device 530 are discovered through a social channel 722 used to perform the NAN communication includes the duration of the discovery window.

The method for operating an electronic device 510 according to an example may further include an operation of discovering the first external electronic device 520 and the second external electronic device 530 through at least one channel supported by the communication circuit 610.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above- described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (510) comprising:
a communication circuit (610) configured to support neighbor awareness network (NAN) communication and P2P communication different from the NAN communication;
a processor (620); and
a memory,
wherein the memory is configured to store instructions which, when executed by the processor, cause the electronic device to:
based on schedule information for discovering a first external electronic device (520) configured to support the NAN communication and a second external electronic device (530) configured to support the P2P communication through at least one channel comprising at least one social channel (721, 722, 723) used to perform a discovery through the P2P communication, discover the first external electronic device (520) and/or the second external electronic device (530) through the at least one social channel (721, 722, 723); and
based on the schedule information, discover the first external electronic device (520) and/or the second external electronic device (530) through a social channel (722) used to perform the NAN communication among the at least one social channel (721, 722, 723).

2. The electronic device of claim 1, wherein the schedule information is configured to comprise the order of discoveries through the at least one social channel (721, 722, 723).

3. The electronic device of claim 1 to 2, wherein the schedule information is configured such that the number of discoveries through a social channel (722) used to perform the NAN communication is larger than the number of discoveries through the at least one social channel (721, 723).

4. The electronic device of claim 1 to 3, wherein the schedule information is configured such that the time of discovery through a social channel (722) used to perform the NAN communication is longer than the time of discovery through the at least one social channel (721, 723).

5. The electronic device of claim 1 to 4, wherein the schedule information is configured such that the time of discovery through a social channel (722) used to perform the NAN communication comprises a duration of a discovery window configured for a NAN cluster comprising the electronic device.

6. The electronic device of claim 1 to 5, wherein the memory is configured to further store an instruction such that the first external electronic device (520) and the second external electronic device (530) are discovered during a time other than a discovery window configured for a NAN cluster comprising the electronic device among the time of discovery through a social channel (722) used to perform the NAN communication.

7. The electronic device of claim 1 to 6, wherein the memory is configured to further store an instruction such that a service discovery frame for discovering the first external electronic device (520) is transmitted and/or a probe request message for discovering the second external electronic device (530) is transmitted during a time other than a discovery window configured for a NAN cluster comprising the electronic device among the time of discovery through a social channel (722) used to perform the NAN communication.

8. The electronic device of claim 1 to 7, wherein the memory is configured to further store an instruction such that, as the first external electronic device (520) is successfully discovered, a NAN cluster comprising the first external electronic device (520) and the electronic device is configured, and in case that characteristics of a discovery window are changed according to the configuration of the NAN cluster, the schedule information is changed.

9. The electronic device of claim 1 to 8, wherein the memory is configured to further store an instruction to change the schedule information such that the period of time for which the first external electronic device (520) and/or the second external electronic device (530) are discovered through a social channel (722) used to perform the NAN communication comprises the duration of the discovery window.

10. The electronic device of claim 1 to 9, wherein the memory is configured to further store an instruction such that the first external electronic device (520) and the second external electronic device (530) are discovered through at least one channel supported by the communication circuit (610).

11. A method for operating an electronic device, the method comprising:
based on schedule information for discovering a first external electronic device (520) configured to support NAN communication and a second external electronic device (530) configured to support P2P communication through at least one channel comprising at least one social channel (721, 722, 723) used to perform a discovery through the P2P communication, discovering the first external electronic device (520) and/or the second external electronic device (530) through the at least one social channel (721, 722, 723); and
based on the schedule information, discovering the first external electronic device (520) and/or the second external electronic device (530) through a social channel (722) used to perform the NAN communication among the at least one social channel.

12. The method of claim 11, wherein the schedule information is configured to comprise the order of discoveries through the at least one social channel (721, 722, 723).

13. The method of claim 11 to 12, wherein the schedule information is configured such that the number of discoveries through a social channel (722) used to perform the NAN communication is larger than the number of discoveries through the at least one social channel (721, 722, 723).

14. The method of claim 11 to 13, wherein the schedule information is configured such that the time of discovery through a social channel (722) used to perform the NAN communication is longer than the time of discovery through the at least one social channel (721, 722, 723).

15. The method of claim 11 to 14, wherein the schedule information is configured such that the time of discovery through a social channel (722) used to perform the NAN communication comprises a duration of a discovery window configured for a NAN cluster comprising the electronic device.
